# EUROPEAN PATENT SPECIFICATION

(11) **EP 2 802 108 B1**
(45) Date of publication and mention of the grant of the patent: **28.08.2019**
(21) Application number: 12864155.2
(22) Date of filing: 16.10.2012
(51) Int. Cl.: H04L 12/701, H04L 12/741, H04L 12/28, H04L 29/12, H04L 29/08, H04L 12/715

(54) **DATA-CENTRIC COMMUNICATIONS SYSTEM AND DATA FORWARDING METHOD**
DATENZENTRISCHES KOMMUNIKATIONSSYSTEM UND DATENÜBERTRAGUNGSVERFAHREN
SYSTÈME DE COMMUNICATION CENTRÉ SUR LES DONNÉES ET PROCÉDÉ DE TRANSFERT DE DONNÉES

(30) Priority: 05.01.2012 JP 2012000590; 19.07.2012 JP 2012160104
(43) Date of publication of application: 12.11.2014
(73) Proprietor: Hitachi, Ltd., Tokyo 100-8280 (JP)
(72) Inventor: MATSUBARA Daisuke, Tokyo 100-8280 (JP); YABUSAKI Hitoshi, Tokyo 100-8280 (JP); TOUMURA Kunihiko, Tokyo 100-8280 (JP); TAKEDA Yukiko, Tokyo 100-8280 (JP)
(74) Representative: MERH-IP Matias Erny Reichl Hoffmann Patentanwälte PartG mbB
(86) International application number: PCT/JP2012/076697
(87) International publication number: WO 2013/103040

(56) References cited:
- WO-A1-2011/150830
- JP-A- 2010 178 343
- US-A1- 2010 195 655
- MIKI YAMAMOTO ET AL.: 'Content Oriented Network' IEICE TECHNICAL REPORT vol. 111, no. 43, 12 May 2011, pages 109 - 114, XP008173883

## Description

### Technical field

The present invention relates to a data-centric communications system, a node, and, a data forwarding method.

### Background art

The IP (Internet Protocol) network identifies a location of a node performing communications using an IP address that is an identifier indicating a location in a network. As a clue to identify the IP address, for example, a host ID (Host Name) extracted from URI (Uniform Resource Identifier) of desired data is defined.

DNS (Domain Name System) is a name resolution service for identifying the location ID indicated by the host ID using the host ID as a search key. Thus, a terminal device communicates with a destination node using the IP address notified by the DNS.

Data-centric network (DCN) is a network for performing routing of a data request for the desired object using a data ID (object ID).

Here, an object means any data that can be accessed via a network, including from a file of multimedia format such as video data, music data, to text data represented by a Web page, and further, data for Machine-to-Machine (M2M) communications such as sensor data and device-status monitoring data. A data ID (Object ID) means an identifier indicating the object.

Although the conventional IP network performs routing using the IP address that is the identifier indicating the location on the network as described above, the data-centric network performs routing using the data ID. Although the IP address changes each time the location of the object changes, the data ID does not change even though the location of the object changes.

The IP network performs routing after identifying the IP address from the URI or the host ID by using the name resolution services such as DNS. In contrast, the data-centric network performs routing to an appropriate object (or its replication) only by specifying the data ID. Therefore, the data-centric network can perform communications more efficiently than the IP network in the case in which the object moves or replications of the object are dispersed in the network.
NPL 1 below describes a method of accessing a service for mapping the object ID to the location ID (GNRS; Global Name Resolution Service).
NPL 2 below describes a method of converting the host ID to the location ID by the hierarchical DHT (Distributed Hash Table).

Another method is proposed, which performs communications by regarding the data ID itself as the location ID without name resolution. PTL 1 below describes network architecture of retrieving the desired object through a routing function of the network using the data ID without using the location ID.

Further reference is made to PTL 2, which discloses a method and node for obtaining content and a content network. The method includes receiving a content request, wherein the content request at least includes an identification for the requested content, determining whether the content corresponding to the identification can be obtained from local, if so, obtaining the content corresponding to the identification from local, otherwise, searching a name resolution system according to the identification to obtain the corresponding target node storing the identification, and obtaining the content corresponding to the identification from the target node. The name resolution system includes a multi-level Distributed Hash Table and a global content resolution structure. Specifically, as described paragraphs [0043] to [0053] of PTL 2, the multilevel DHT is searched for a content storage location list corresponding to the name according to the name, and a name searching result (the content storage location list) is returned. Then, the content storage location list in the resolution record corresponding to the name is searched out and a target node is selected from the content storage location list, and at last, the content corresponding to the name from the target node is acquired.

### Citation List

### Patent Literature

PTL 1: Japanese Patent Publication No. 2009-278624.
PTL 2: WO 2011/150830 A1

### Non Patent Literature

NPL 1: Samuel C. Nelson, Gautam Bhanage, Dipankar Raychaudhuri. GSTAR: Generalized Storage-Aware Routing for MobilityFirst in the Future Mobile Internet, MobiArch'11, June 28, 2011.
NPL 2: Matteo D'Ambrosio, et al. D-6.2 Second NetInf Architecture Description, the FP7 4WARD Project, January 14, 2010.

### Summary of Technical Problem

There are many cases in which a terminal storing data or data itself moves. For example, some sensors and devices may be connected to a network via wireless access and send various information, which some other terminals that are connected to the network can retrieve and utilize. In addition, a host device accessed by terminal devices, such as a Web server, may be allowed to move to a remote location by an art such as server virtualization technology.

In this way, even if key information for name resolution, such as host ID or data ID, is left unchanged, a location ID obtained by an one-time name resolution at a certain point of time is able to be used only in a shorter time when the location ID that is a result of the name resolution is updated as the time elapses.

However, no method has been proposed, for performing efficient data communications under situations in which data locations continues to be updated with time.

In a method that provides name resolution services as proposed by NPL 1 and NPL 2, since data communications starts after name resolution is completed, the name resolution is needed to be performed as preparation prior to each data communication. Therefore, the data communications is delayed to start until the name resolution is completed under the situation in which the location ID keeps being updated.

In another method that regards a data ID itself as a location ID as described in PTL 1, it is sure that no preparation of name resolution is required and that the start time of the data communications is advanced, but, it is necessary for each node located on a route from the source to the destination to prepare a respective entry of a forwarding table that indicates the next hop for directing to the destination for each data ID. Therefore, the number of entries in the forwarding table becomes enormous, and search time and update time of the forwarding table become bottlenecks to cause to degradation of data communications performance.

Therefore, the primary purpose of the present invention is to solve the problems described above and to enable an efficient data communications under the situations in which the data locations continue to be updated with time.

### Solution to Problem

In order to solve the above problems, the present invention provides a data-centric communications system according to claim 1 and a data forwarding method according to claim 11, with various embodiments as defined by the dependent claims. Preferred embodiments of the invention are described in the dependent claims.

An aspect relates to a data-centric communications system comprising a plurality of nodes and a network, wherein
the plurality of nodes are coupled by the network;
a first one of the plurality of nodes receives a request message from a terminal to retrieve an object;
each node from the first node to a second one of the plurality of nodes performs routing of the request message using an object ID and routing information, the object ID is hierarchized and an object identifier, and the second node performs name resolution;
the second node converts the object ID of the request message to a location ID of a third one of the plurality of nodes by referring to name resolution information, and the third node retains the object;
each node from the second node to the third node performs routing of the request message using the location ID converted, and
the third node itself retrieves the object;
each node from the third node to the first node performs routing of a return message including the object retrieved, thereby the terminal retrieves from the first node the object that the terminal requests using the request message.

The other solutions are described below.

### Advantageous Effects of Invention

According to the present invention, data communications can be performed efficiently under a situation in which a location of data continues to be updated with time.

### BRIEF DESCRIPTION OF DRAWINGS

FIG. 1 is a configuration diagram showing a data-centric communications system according to an embodiment of the present invention.
FIG. 2 is an explanatory diagram showing a format of a message flowing through the data-centric communications system according to the embodiment of the present invention.
FIG. 3 is a configuration diagram showing a configuration of each node of the data-centric communications system according to the embodiment of the present invention.
FIG. 4 is a flowchart showing a sending process (from bottom to top) of an object request message according to the embodiment of the present invention.
FIG. 5 is a flowchart showing a sending process (from top to down) of the object request message according to the embodiment of the present invention.
FIG. 6 is a flowchart showing a process in each node of handling the object request message according to the embodiment of the present invention.
FIG. 7 is an explanatory diagram showing a process of handling the object request message at each table according to the embodiment of the present invention.
FIG. 8 is a flowchart showing a process (from bottom to top) of sending an object return message according to the embodiment of the present invention.
FIG. 9 is a flowchart showing a process (from top to down) of sending the object return message according to the embodiment of present invention.
FIG. 10 is a flowchart showing a process in each node of handling the object return message according to the embodiment of the present invention.
FIG. 11 is an explanatory diagram showing a process of handling the object return message at each table according to the embodiment of the present invention.
FIG. 12 is a configuration diagram showing a data-centric communications system according to the embodiment of the present invention.
FIG. 13 is a flowchart showing a process (from bottom to top) of forwarding an object registration message according to the embodiment of the present invention.
FIG. 14 is a flowchart showing a process (from top to down) of forwarding the object registration message according to the embodiment of the present invention.
FIG. 15 is a flowchart showing a process in each node of handling the object registration message according to an embodiment of the present invention.
FIG. 16 is an explanatory diagram showing a process of handling the object registration message at each table according to an embodiment of the present invention.
FIG. 17 is a flow chart showing another configuration of a process of handling the object request message at each node according to the embodiment of the present invention.
FIG. 18 is a configuration diagram showing a data-centric communications system according to the embodiment of the present invention (for describing two kinds of locations of data).
FIG. 19 is a configuration diagram showing a registration of the object at an old location in the system of FIG. 18 according to the embodiment of the present invention.
FIG. 20 is a configuration diagram showing a registration of the object at a new location in the system of FIG. 18 according to the embodiment of the present invention.
FIG. 21 is a configuration diagram showing requests of the objects at the two locations in the system of FIG. 18 according to the embodiment of the present invention.
FIG. 22 is a flowchart showing a process of handling a request for the object at the new location of FIG. 21 according to an embodiment of the present invention.
FIG. 23 is a flowchart showing a process of returning the object at the new location of FIG. 21 according to the embodiment of the present invention.
FIG. 24 is a flowchart showing a process of handling a request for the object at the old location of FIG. 21 according to the embodiment of the present invention.
FIG. 25 is a flowchart showing a process of returning the object at the old location of FIG. 21 according to the embodiment of the present invention.
FIG. 26 is a configuration diagram showing a route modification after registration of the object of FIG. 20 according to the embodiment of the present invention.
FIG. 27 is a flowchart showing a process for route modification in FIG. 26 according to the embodiment of the present invention.
FIG. 28 is a flow chart showing a process of a name resolution node in the route modification process in FIG. 26 according to the embodiment of the present invention.
FIG. 29 is a configuration diagram showing an object request after the route modification in FIG. 26 according to the embodiment of the present invention.
FIG. 30 is a configuration diagram showing a route modification different from that of FIG. 26 in the system of FIG. 18 according to the embodiment of the present invention.
FIG. 31 is a configuration diagram showing a route modification different from that of FIG. 26 in the system of FIG. 18 according to the embodiment of the present invention.

### Description of Embodiments

Hereinafter, detailed description is made of an embodiment of the present invention with reference to the drawings.

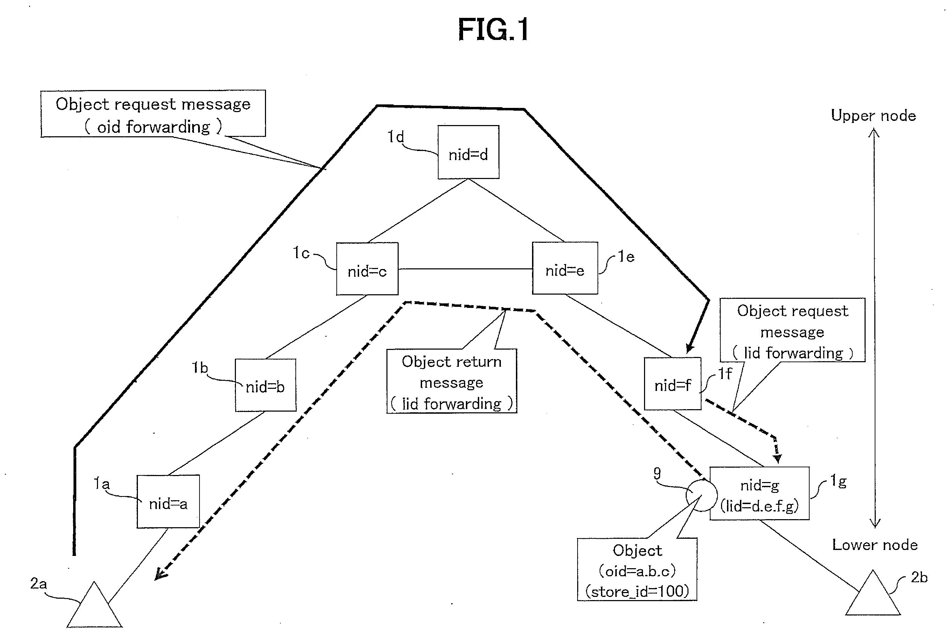

FIG. 1 is a configuration diagram showing a data-centric communications system. Data-centric network (DCN) used for a data-centric communications system is a network for forwarding an access to a desired object to the object location using an object ID (hereinafter, abbreviated as "oid"). For configuring such a network, the data-centric communications system distributes and manages location information of the object on a plurality of nodes 1 (1a to 1g).

Here, oid is a separate ID space and separate data from the other id (for example, nid indicating a node ID, and lid indicating a location ID). Hierarchical representation of oid is described below.

In the claims, Node 1a is represented as a first node, Node If as a second node, and Node 1g as a third node.

Each device in the data-centric communications system is configured as a computer each including a CPU (Central Processing Unit), memory, a hard disk (storage unit), and a network interface, and the computer operates the respective processing units by the CPU's execution of a program read into the memory thereby.

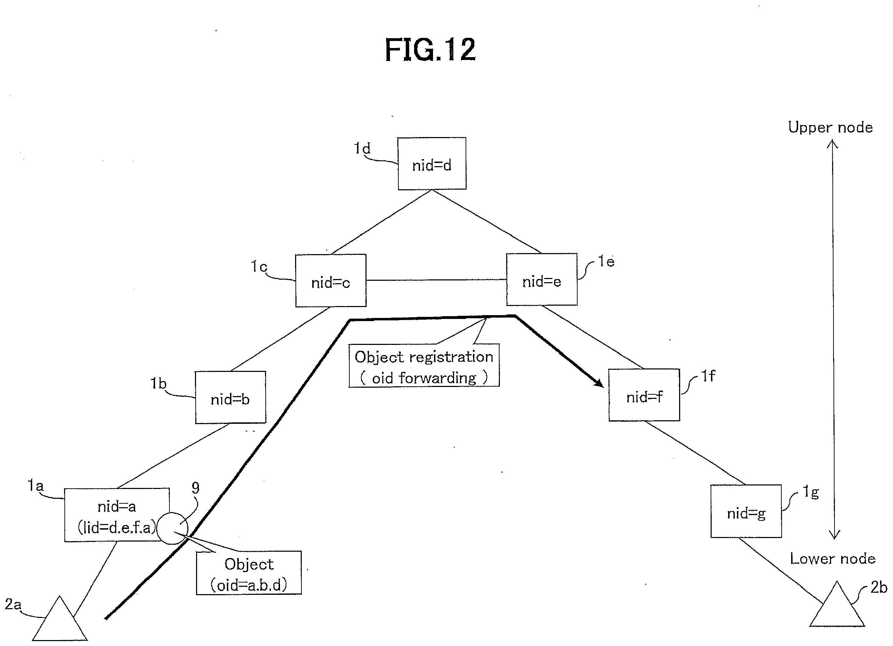

The data-centric communications system comprises each node 1, a terminal 2a included in Node 1a, and a terminal 2b included in Node 1g, which are coupled by a network. Each terminal 2 (2a, 2b) instructs Node 1 to access an object 9. There lists the following three types of messages for instructing the access to the object 9:
- Object request message: a message packet indicating a request of the terminal 2 for reading contents of the object 9 through Node 1.
- Object return message: a message packet including the contents of the object 9 as a response to the object request message and being sent back to the terminal 2 that is the source of the object request message.
- Object registration message: a message packet indicating a request of the terminal 2 for writing the contents of the object 9 into Node 1 (described in FIG. 12 and higher).

Each node 1 is given the node ID (nid). Hereinafter, the end character of the reference sign of Node 1 is used for a node ID of the same node in the present embodiment (for example, the node ID of Node 1a is "a", which is derived from "a" of the end character of the reference sign "Node 1a").

Here, nid is a separate ID space and separate data from the other ids such as oid and lid.

Each node 1 is coupled with each other in a hierarchical topology having a Node 1d as a vertex. In FIG. 1, the upper level node is placed at the upper side of FIG. 1, and the lower level node is placed at the lower side. For example, Node 1d is a parent node (upper level node) of Node 1c and 1e; Node 1c and 1e are upper level nodes of Node 1b and 1f, respectively; Node 1b and 1f are upper level nodes of Node 1a and 1g, respectively.

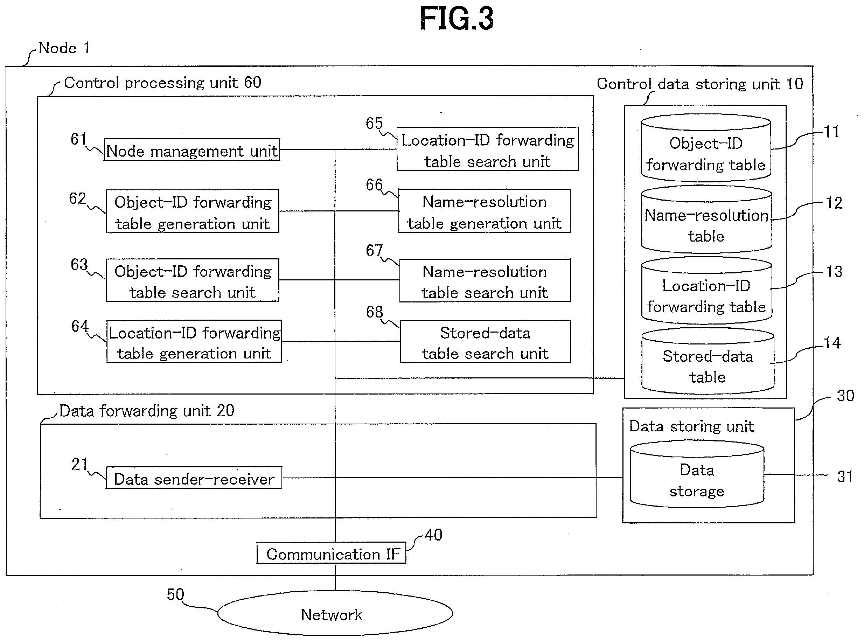

To reflect the hierarchical configuration of the nodes 1 into the data-centric communications system, forwarding tables described below with reference to FIG. 3 (object-ID forwarding table 11, location-ID forwarding table 13) have the upper level node viewed from the source node 1 itself set as a default forwarding destination (next hop) when a forwarding destination cannot be found.

Node 1 handles an object request message from Terminal 2a in the order of Step 1 to 3 as follows:
Step 1: Each node 1 (1a → 1b → 1c → 1d → 1e → 1f) forwards the object request message to a node 1 that is the next hop using an object ID specified as a destination in the object request message. Such a forwarding using the object ID is referred to as "oid forwarding", and FIG. 1 shows a forwarding route thereof using a solid arrow.
Step 2: Node If performing name resolution converts the object ID (= a.b.c) to a location ID (hereinafter, abbreviated as "lid") of Node 1g having the object (= d.e.f.g).

Here, lid is a separate ID space and separate data from the other id (for example, nid or oid).

lid includes an existing ID such as an IP address and a unique ID that is different from the IP address and specific to the data-centric network. An example of a hierarchical representation of the lid specific to the data-centric network is described below.

Then, Node If forwards the object request message to Node 1g that is the next hop, using the location ID (= d.e.f.g) that is the destination of the object request message. Such a forwarding using the location ID is referred to as "lid forwarding", and FIG. 1 shows a forwarding route thereof using a dashed arrow. (Step 3) Node 1g retrieves the object 9 specified in the object request message from the storage unit of Node 1g itself.

Each node 1 handles an object return message to Terminal 2a in the order of Step 4 to Step 6 as follows:
Step 4: Node 1g generates an object return message containing the object 9 that is specified in the object request message. The destination of the object return message is Terminal 2a of the source of the object request message. Then, Node 1g forwards the object return message to Node 1f that is the next hop by using the location ID of Terminal 2a that is the destination of the object return message.
Step 5: Each node 1 (1f → 1e → 1c → 1b → 1a) forwards the object return message to the node 1 that is the next hop using the location ID of Terminal 2a that is the destination of the object return message received. At the same time, along with the forwarding process of the object return message, each node 1 stores a forwarding destination of the object ID (= a.b.c) in the object request message (for example, Node 1b is a forwarding destination as viewed from Node 1a) into an forwarding table thereof.
Step 6: The terminal 2a retrieves the object 9 specified by the object request message issued in Step 1 by receiving the object return message from Node 1a.

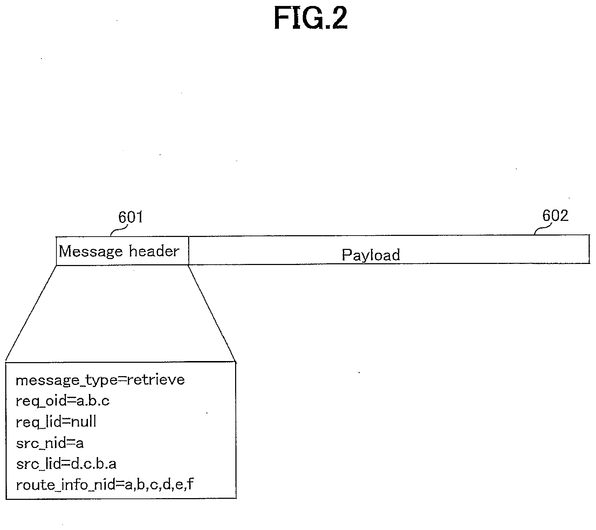

FIG. 2 is an explanatory diagram showing a format of a message flowing through the data-centric communications system. Message header 601 stores information referred to by a node when the node forwards a message. Payload 602 includes data of objects.

The configuration of the message header 601 is as follows. "message_type" on the line 1 contains a message type, which includes any one of "retrieve" indicating an object request message, "return" indicating an object return message, and "register" indicating an object registration message.

The lines 2 and 3 beginning with "req" indicate a request party (destination) of a message. "req_oid" indicates the object ID of the destination, and "req_lid" indicates the location ID of the destination.

Here, "null (no value)" in the "req_lid" indicates a state before the name resolution is completed by Node If, therefore oid forwarding using "req_oid" as a search key is performed by each node 1. On the other hand, a case in which a value is substituted into "req_lid" indicates a state after the name resolution is completed, lid forwarding using "req_lid" as a search key is performed by each node 1.

The lines 4 and 5 beginning with "src" indicate sources of a message. "route_info_nid" in the line 6 indicates the order of the nodes 1 thorough which a message itself has passed. In FIG. 2, the message has passed through each node 1 in the order of 1a → 1b → 1c → 1d → 1e → 1f.

Node 1 or terminal 2 that generates a message fills the lines 1, 2, 4, and 5 of the message header 601. Node If that performs name resolution fills line 3 of the message header 601. Each node 1 fills line 6 of the message header 601 with a node ID thereof.

Here is explained a hierarchical representation of the oid and the lid. In oid (for example, =a.b.c) and lid (for example, = d.e.f.g), a plurality of elements (for example, a, b, c in oid) are connected using "." for a delimiter sequentially from the head. In such a hierarchical representation using "." for a delimiter, the more front (the more left) indicates the higher layer, and the more tail (the more right) indicates the lower layer. The match determining process of entries in the hierarchical representation results in any one of the followings.

A case of mismatch: the search key "a.b.c" and the search key "d.e.f" do not match at the topmost characters "a" and "d". Therefore, since there is no matching portion between the search key and the search object, the match determining process results in "mismatch (no hit)".

A case of partial match: the search key "a.b.c" has a matching portion "a.b" with the search object "a.b" from the beginning, but, at the tail portion "c" does not match. Thus, the case in which a portion extracted from the beginning of the search key "a.b.c" ("a.b") matches the search object "a.b" is represented as "partial match (hit)". Additionally, a portion extracted from the beginning of the hierarchical representation of the "a.b.c" ("a.b") is referred to as "prefix".

A case of exact match: the search key "a.b.c" matches the search object "a.b.c" from the top to the tail. Such a case is referred to as "exact match (hit)."

Note that when a first search object "a", a second search object "a.b", and a third search object "a.b.c" exist in the same forwarding table for the search key "a.b.c", the object matching the search key "a.b.c" at the most point is regarded as hit on a priority basis (so-called "longest match rule"). In this example, the search results of the search key "a.b.c" are the exact match of the third search object on the highest priority, a partial match of the second search object on the second priority, a partial match of the first search object on the lowest priority.

FIG. 3 is a configuration diagram showing a configuration of each node of the data-centric communications system. Node 1 includes a control data storing unit 10, a data forwarding unit 20, a data storing unit 30, a communications IF (interface) 40 for connecting to a network 50, and a control processing unit 60. The terminal 2 may also include each of the components of Node 1 illustrated in FIG. 3 (for example, node management unit 61 and the like).

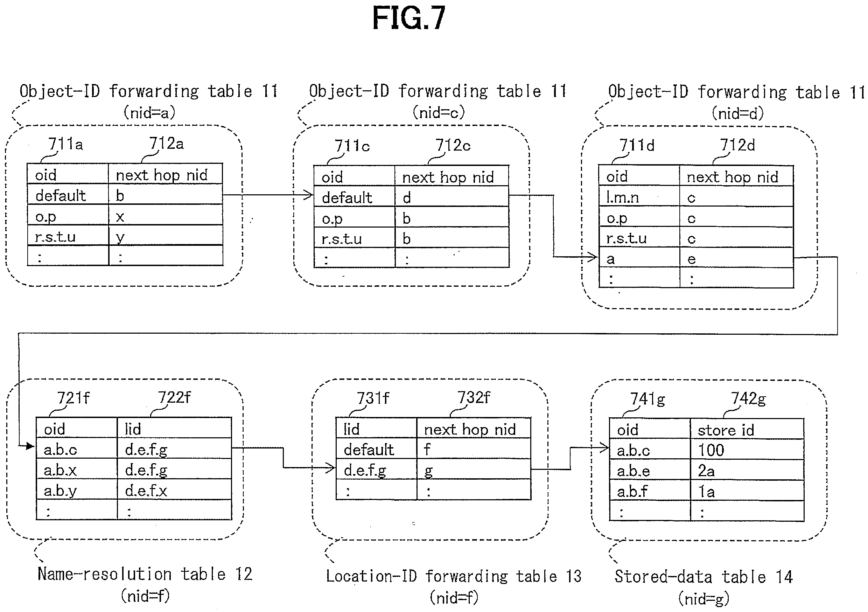

The control data storing unit 10 includes an object-ID forwarding table 11, a name-resolution table 12, and a location-ID forwarding table 13, and a stored-data table 14. Each of the above tables is detailed below with reference to FIG. 7.

The data forwarding unit 20 includes a data sender-receiver 21. The data sender-receiver 21 controls send and receive of each message.

The data storing unit 30 includes a data storage 31.The data storage 31 contains the object 9. For example, in FIG. 1, Node 1g contains the object 9.

The communications IF 40 is an interface for interconnecting each component of Node 1 and the network 50 for connecting to the other device.

The control processing unit 60 includes a node management unit 61, an object-ID forwarding table generation unit 62, an object-ID forwarding table search unit 63, a location-ID forwarding table generation unit 64, a location-ID forwarding table search unit 65, a name-resolution table generation unit 66, a name-resolution table search unit 67, and a stored-data table search unit 68.

The object-ID forwarding table generation unit 62 and the object-ID forwarding table search unit 63 perform generation and search of the object-ID forwarding table 11.

The location-ID forwarding table generation unit 64 and the location-ID forwarding table search unit 65 perform generation and search of the location-ID forwarding table 13.

The name-resolution table generation unit 66 and the name-resolution table search unit 67 perform generation and search of the name-resolution table 12.

The stored-data table search unit 68 identifies a store destination of the object 9 in the data storage 31 by searching the stored-data table 14.

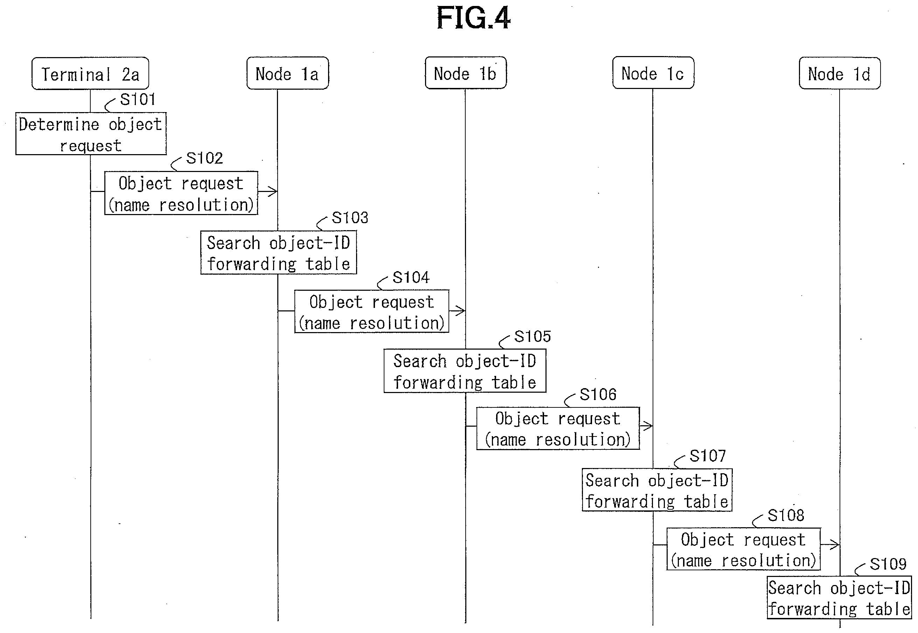

FIG. 4 is a flowchart showing a forwarding process (from bottom to top) of an object request message.

In S101, the node management unit 61 of Terminal 2a determines to request an object "oid = a.b.c". This determination is caused by a user operation, a timer of the terminal, a trigger due to an external factor, or the like.

In S102, the node management unit 61 of Terminal 2a sends an object request message (for name resolution) to Node 1a via the data sender-receiver 21 thereof. Node 1a receives the object request message via the data sender-receiver 21 thereof.

In S103, the object-ID forwarding table search unit 63 of Node 1a sets the object ID in the object request message received as a search key to search the object-ID forwarding table 11. As the result of the search, if the object ID does not hit anything, the next higher level node that is set as a "default" is specified as the next hop (in this case, Node 1b).

In S104, Node 1a sends the object request message (for name resolution) to Node 1b. In S105 to 109 as well, each node 1 also repeats the process of searching the object-ID forwarding table 11 and forwarding the object request message to the higher level node.

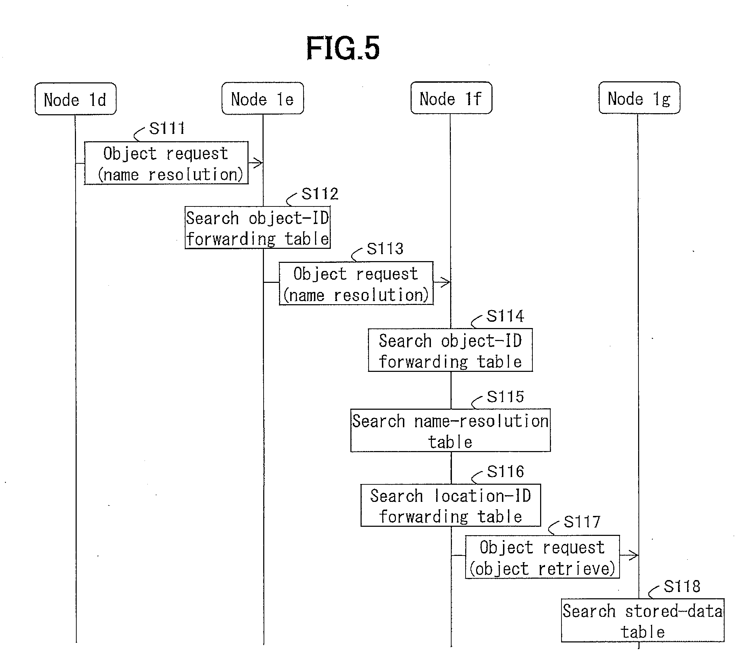

FIG. 5 is a flowchart showing the sending process (from top to down) of the object request message as the continuation from FIG. 4.

In S111, as the result of the search in S109, the prefix of the object ID ("a" at the top of "a.b.c") hits (partial match), thus the object-ID forwarding table search unit 63 of Node 1d obtains the ID of the next hop (nid = e). And Node 1d sends the object request message (for name resolution) to Node 1e.

In S112 and S113, similarly to S111, the prefix "a" partially matches. As the result of the search, Node 1e obtains the ID of the next hop (nid = f) and forwards the object request message to Node If.

In S114, the object-ID forwarding table search unit 63 of Node 1f searches the object-ID forwarding table 11, and as the result, finds that the object ID hits in the exact match. Such node as Node If in which the object ID hits in the exact match is responsible for name resolution.

In S115, the name-resolution table search unit 67 of Node If sets the object ID as a search key to search the name-resolution table 12 and obtains the location ID (lid = d.e.f.g) as the search result.

In S116, the location-ID forwarding table search unit 65 of Node If sets the location ID obtained in S115 (lid = d.e.f.g) as a search key to search the location-ID forwarding table 13 and obtains an ID of the next hop (nid = g).

In S117, Node If sends the object request message (for object retrieve) generated from the object request message (for name resolution) to Node 1g that is the next hop obtained at S116.

This means that Terminal 2a does not need to send two messages for name resolution and for object retrieve, and that the nodes 1 of the data-centric communications system converts the message for name resolution to the message for object retrieve. This results in shortening the preparation period to wait for the response to the message for name resolution.

In S118, the stored-data table search unit 68 of Node 1g sets as a search key "oid = a.b.c" in the object request message received to search the stored-data table 14, and obtains the stored data ID (in FIG. 1, store_id = 100). The stored data ID is an ID of an object in the data storage 31. The data sender-receiver 21 specifies the stored data ID to the data storage 31 and reads the requested object 9 therefrom.

Then, the data sender-receiver 21 stores the read objects 9 into the payload 602 and replaces the IDs of the source (lines beginning with "src") and the destination (lines beginning with "req") of the message header 601 with each other, in order to generate an object return message.

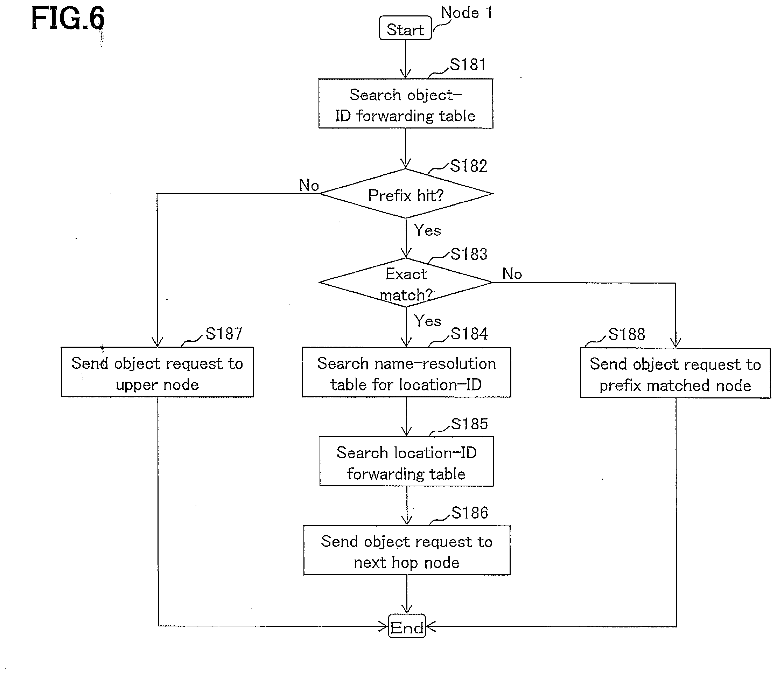

FIG. 6 is a flowchart showing a process in each node for handling the object request message. In the following description, an object ID means the object ID included in the object request message received.

In S181, the object-ID forwarding table search unit 63 searches the object-ID forwarding table 11 for the object ID that is set as a search key.

In S182, the object-ID forwarding table search unit 63 proceeds to S183 if there is a prefix hit by the search of S181 (nid = d, e, f, in FIG. 1); to S187 if no prefix hit (nid = a, b, c, in FIG. 1).

In S183, the object-ID forwarding table search unit 63 proceeds to S184 if the hit in the search of S181 is the exact match (nid = f in FIG. 1); to S188 if the partial match (nid = d or e in FIG. 1).

In S184, the name-resolution table search unit 67 searches the name-resolution table 12 for the object ID that is set as a search key to obtain the location ID for the object ID.

In S185, the location-ID forwarding table search unit 65 searches the location-ID forwarding table 13 for the location ID obtained in S184 that is set as a search key and obtains the ID of the next hop.

In S186, the data sender-receiver unit 21 sends the object request message to the next hop ID obtained in S185 as an address.

In S187, the data sender-receiver unit 21 sends the object request message to the upper level node that has been described as "default" in the object-ID forwarding table 11.

In S188, the data sender-receiver unit 21 sends the object request message to the next hop corresponding to the entry hit in partial match.

FIG. 7 is an explanatory diagram showing a process of handling the object request message at each table. Note that nid of node 1 including each table in FIG. 7 is attached after the tail of the reference sign indicating a column element of the table. For example, to oid column of the object-ID forwarding table 11 with nid = a, "a" showing the nid is added to "711" showing oid. However, since each component of FIG. 7 is the same in its nature and function in a table stored in any node 1 and only data stored therein is different, nid at the tail of the reference sign indicating the column element is omitted in the description of each component of FIG. 7 below.

The object-ID forwarding table 11 has oid711 that is a search object column of the search key (e.g., 711a), and nexthop_nid712 that indicates the next hop that is the search result (e.g., 712a) recorded in association with each other.

Now, description is made of the difference of the present embodiment from the communications disclosed by PTL 1 that regards a data ID itself as a location ID. It may be common between the ID forwarding table 11 of the present embodiment and a forwarding table of the PTL 1 that the search key is the data ID itself (i.e., object ID).

However, the meaning of the next hop indicated by nexthop_nid712 of the present embodiment differs from that of the next hop of PTL 1. The result of searching the object-ID forwarding table 11 of the present embodiment is a next hop directing toward the node 1 performing name resolution of the object ID; but the result of searching the forwarding table of PTL 1 is a next hop directing toward a node storing the object ID that is the search key.

Therefore, under a situation in which the location of the object 9 is frequently changed, since PTL 1 may need to keep updating the latest location of each of many objects frequently in forwarding tables thereof, a storage capacity for the forwarding table and the processing load may increase. In contrast, even under the above situation, in the object-ID forwarding table 11 of the present embodiment, the location of the node 1 performing name resolution is rarely changed, therefore, the storage capacity for the forwarding table and the processing load can be reduced.

The name-resolution table 12 records oid721 that is a column to be searched for the search key and lid722 indicating a result of the name resolution that is a result of the search, in association with each other.

The location-ID forwarding table 13 records lid 731 that is a column to be searched for the search key and nexthop_nid 732 indicating the next hop that is the search result, in association with each other.

The stored-data table 14 records oid741 that is a column to be searched for the search key and store_id 742 indicating the record location in the data storing unit 30, in association with each other.

Note that "default" is an entry that indicates a predetermined (default) forwarding destination for the case when the search key does not hit any target of the search and corresponds to the upper one of the nodes 1 described regarding FIG. 1.

Here, the solid arrow in FIG. 7 shows the order in which each table is referenced.

In S103, "default" is referenced in the object-ID forwarding table 11 of Node 1a.

In S107, "default" is referenced in the object-ID forwarding table 11 of Node 1c.

In S109, "a" is referenced in the object-ID forwarding table 11 of Node 1a.

In S115, "a.b.c" is referenced in the name-resolution table 11 of Node 1f.

In S116, "d.e.f.g" is referenced in the location-ID forwarding table 13 of Node 1f.

In S118, "a.b.c" is referenced in the stored-data table 14 of Node 1g.

It should be appreciated that each forwarding table generation unit (the object-ID forwarding table generation unit 62, and the location-ID forwarding table generation unit 64) may consolidate a plurality of entries into a single entry for an entry in each forwarding tables to be generated, in order to reduce the number of entries. The plurality of entries that may be consolidated are, for example, those satisfying both the following two conditions.
Condition 1: the plurality of entries that have the same prefix.
Condition 2: the plurality of entries that have the same next hop.

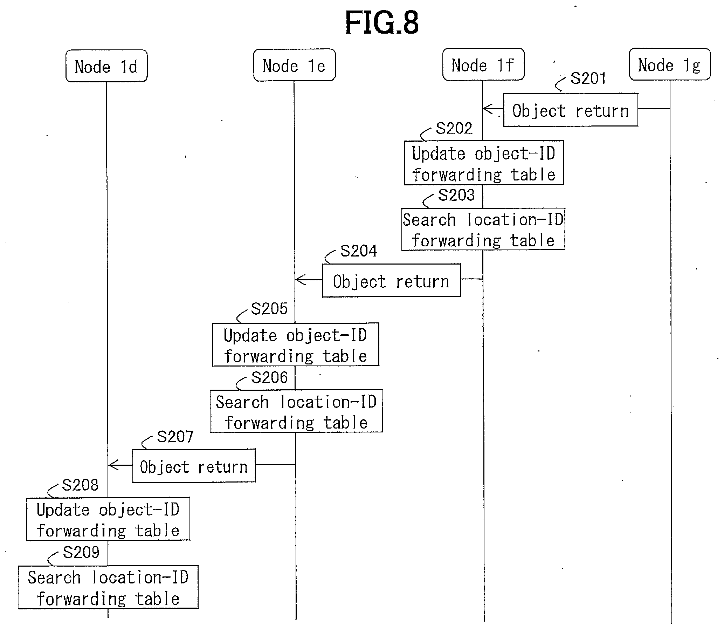

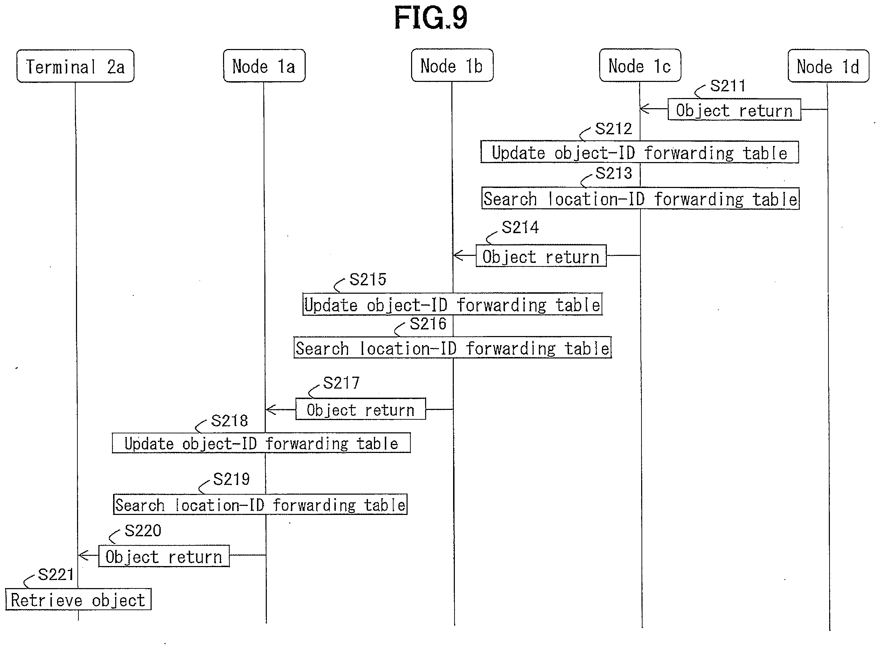

FIGS. 8 and 9 are flowcharts showing a process of sending the object return message. FIG. 8 shows a process being continued from FIG 5.

In S201, Node 1g sends the object return message (generated in S118) to Node 1f.

In S202, the object-ID forwarding table generation unit 62 of Node If updates the object-ID forwarding table 11 thereof.

The content of oid711 in the updated entry is the object ID in the object return message (oid of the object 9 contained in the payload 602).

The content of nexthop_nid712 of the updated entry is the ID of the receiving node of the object request message that is a node 1 adjacent as the next hop (i.e., nid = g).

When oid711 equal to the update content already exists in the object-ID forwarding table 11, only nexthop_nid712 of the entry is updated by override; and when the oid711 does not exist, a new entry for the update content is generated and added to the object-ID forwarding table 11.

Thereby, when the same object 9 is requested again, the entry for the object is present in the object-ID forwarding table 11 and a route that allows proper forwarding of the object request message is established.

In S203, the location-ID forwarding table search unit 65 of Node 1f sets the location ID of the object return message as a search key to search the location-ID forwarding table 13, and obtains the ID of the next hop (nid = e) as the search result.

In S204, Node If sends the object return message to Node 1e that is the next hop of which the ID is obtained in S203.

In S205 to S209, and S211 to S220 in FIG. 9 as well, the update process of the object-ID forwarding table 11 (corresponding to S202), the search process for the next hop in the location-ID forwarding table 13 (corresponding to S203), and the sending process of the object return message to the next hop searched (corresponding to S204).

In S221, Terminal 2a retrieves the object 9 from Node 1a.

Note that the content for the nexthop_nid712 of the updated entry described in S202 may be a Node 1 on a shortcut route instead of the receiving node.

The shortcut route is a route that can reduce the number of hops among the candidate routes toward the same destination. For example, in FIG. 1, a route with a shortcut route < Node 1c →Node 1e> requires the number of hops less than a route without a shortcut route <Node 1c → Node 1d → Node 1e>.

The following explains how to obtain a Node 1 on the shortcut route.

In S212, the object-ID forwarding table generation unit 62 of Node 1c reads "route_info_nid" on the sixth line of the message header 601. The "route_info_nid" indicates an order list of nodes 1 that have been passed through <a, b, c, d, e, and f> (refer to FIG. 2).

When Node 1c finds a node that locates beyond the receiving node and that is adjacent thereto, i.e. "nid = e" (directly connected to Node 1c in FIG. 1), Node 1c determines the node "nid = e" as a node 1 on the shortcut route and adopts the node "nid = e" as nexthop_nid712.

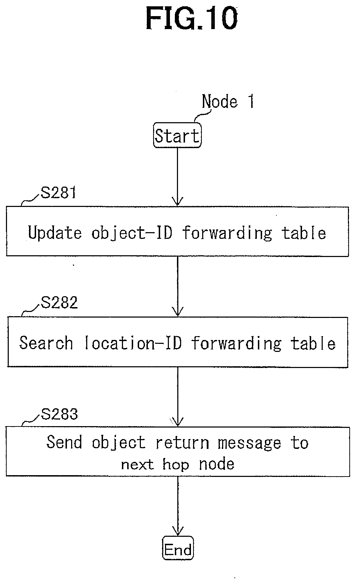

FIG. 10 is a flowchart showing a process at each node of handling the object return message.

In S281, as described in S202, the object-ID forwarding table generation unit 62 updates the object-ID forwarding table 11 thereof on the basis of the entries of the object ID of the object return message.

In S282, the location-ID forwarding table search unit 65 sets the location ID of the object return message as a search key to search the location-ID forwarding table 13 and obtains the ID of the next hop.

In S283, the object return message is sent to the ID of the next hop obtained in S282 as an address.

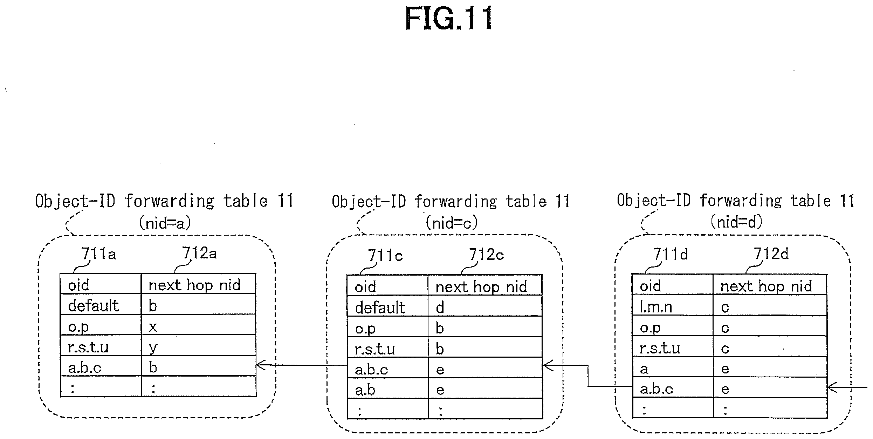

FIG. 11 is an explanatory diagram showing a process of handling the object return message at each table. Of the six tables of FIG. 7, three of the object-ID forwarding table 11 that are updated along the sending of the object return message (the other object-ID forwarding tables 11 are updated but not shown).

As described in S202, the entry of which oid711 is set as "a.b.c" is newly added into each of the object-ID forwarding table 11 (in FIG. 11, the entries indicated by arrows; each arrow indicates the update order).

In addition, the entry of which oid711 is set as "a.b" is also added in the object-ID forwarding table 11 of Node 1c, but this entry is for adopting Node 1 on the shortcut route and associated with "a.b" that is the prefix of the object ID "a.b.c."

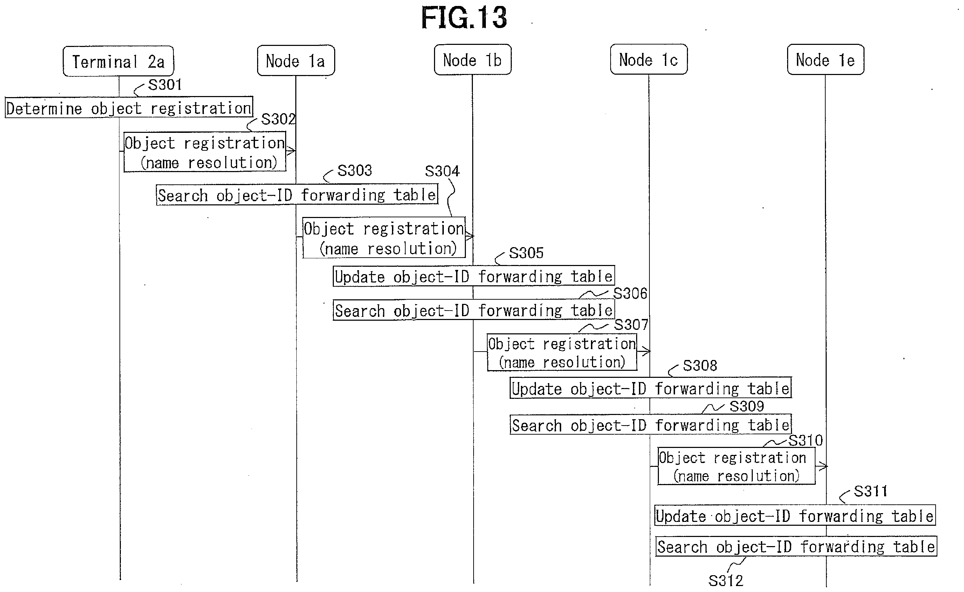

FIG. 12 is a configuration diagram showing a data-centric communications system. For example, FIGS. 13 to 16 describe a process of forwarding from Node 1a to Node If an object registration message notifying that Terminal 2a registers the object 9 (oid = a.b.d) into Node 1a.

The object registration message is forwarded up to Node If that performs name resolution, while storing oid "a.b.d" of the registered object into the object-ID forwarding table 11 of each node 1 passed through. Then, Node If stores in the name-resolution table 12 thereof the location ID "d.e.f.a" of Node 1a in which the object ID and the object are registered.

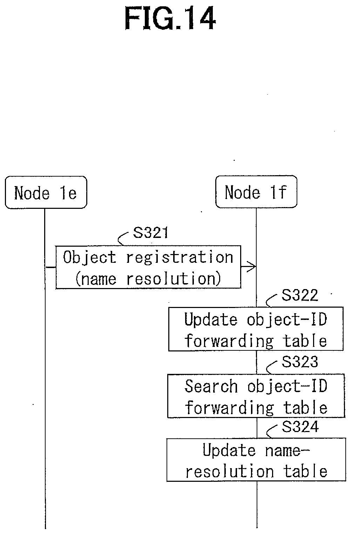

FIGS. 13 and 14 are flowcharts showing a process of forwarding an object registration message.

In S301, the node management unit 61 of Terminal 2a determines to register an object "oid = a.b.d". This determination is caused, for example, by a user operation, a timer of the terminal, an occurrence of a trigger due to an external factor, or the like.

In S302, the node management unit 61 of Terminal 2a sends the object registration message (for name resolution) to Node 1a via the data sender-receiver 21. Node 1a receives the object registration message via the data sender-receiver unit 21. When Node 1a recognizes that the registration destination is Node 1a itself, Node 1a reads and stores into the data storage 31 the object 9 from the payload 602 of the object registration message, and registers the storage location thereof in the stored-data table 14.

In S303, the object-ID forwarding table search unit 63 of Node 1a sets as a search key the object ID of the object registration message received in S302 to search the object-ID forwarding table 11. As the result of the search, since the object ID is not hit, the next hop is set as Node 1b that is an upper node.

In S304, Node 1a sends the object registration message to Node 1b that is identified as the next hop in S303.

In S305, the object-ID forwarding table generation unit 62 of Node 1b updates the object-ID forwarding table 11, in the same manner as S202.

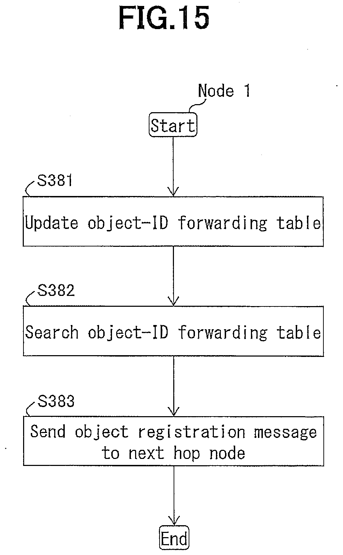

In S307 to S312, and S321 and S322 in FIG. 15, the search of the object-ID forwarding table 11 (corresponding to S303), the sending of the object registration message to the next hop (corresponding to S304), and the update of the object-ID forwarding table 11 (corresponding to S305) are repeated in the same manner.

In S323, the object-ID forwarding table search unit 63 of Node If sets "oid = a.b.d" as a search key to search the object-ID forwarding table 11, in the same manner as S303. The result of the search is regarded as the exact match because the object-ID forwarding table 11 of Node If includes an entry with oid721f = "a.b.c" having the same prefix "a.b" (see FIG. 7) although the object-ID forwarding table 11 includes no exact match entry with oid721f = "a.b.d". In other words, Node If regarded as an exact match is set as a node 1 performing name resolution.

In S324, the name-resolution table generation unit 66 of Node If sets lid 731f = "d.e.f.a" that is the location ID of Node 1a in the name-resolution table 12, generates a new entry in which nexthop_nid732f = Node 1e, and reflects the new entry into the name-resolution table 12. Here, the reflection means to rewrite only nexthop_nid732f if an entry with lid 731f = "d.e.f.a" already exists; and to add a new entry in the name-resolution table 12 if the entry does not exist.

FIG. 15 is a flowchart showing a process at each node of handling the object registration message.

In S381, the object-ID forwarding table generation unit 62 updates the object-ID forwarding table 11 in the same manner as S202 (S305).

In S382, the object-ID forwarding table search unit 63 sets the object ID of the object registration message as a search key to search the object-ID forwarding table 11 and obtains the next hop as the result of the search.

In S383, the data sender-receiver unit 21 sends the object registration message to the ID of the next hop obtained at S382 as an address.

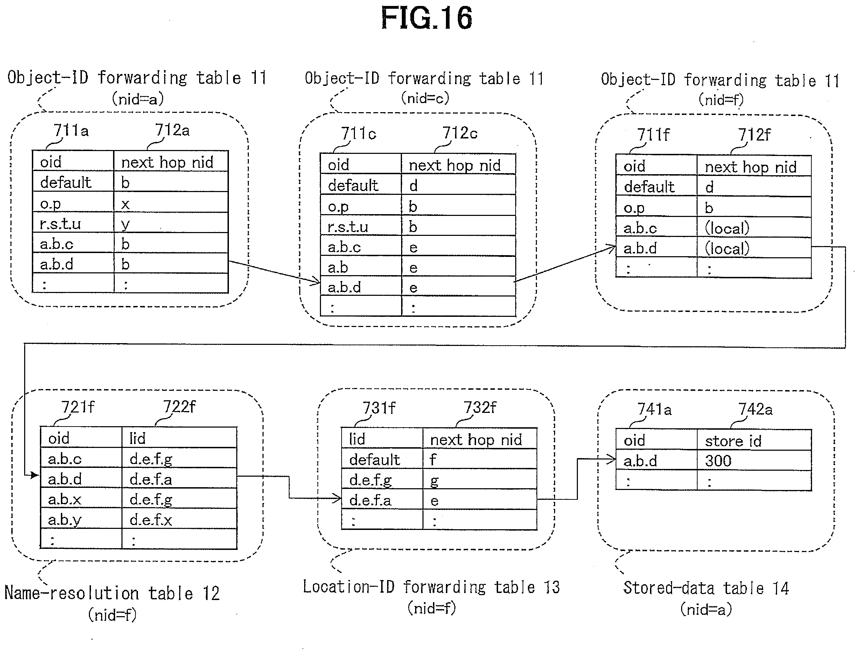

FIG. 16 is an explanatory diagram showing a process of handling the object registration message at each table. Arrows in FIG. 16 show the reference sequence of the tables to be referred to when an object request message for requesting an object 9 arrives after the registration of the object 9 by an object registration message.

First, oid711a = "a.b.d" is referenced in the object-ID forwarding table 11 of Node 1a (the object-ID forwarding table 11 of Node 1b is not shown). Next, oid711c = "a.b.d" is referenced in the object-ID forwarding table 11 of Node 1c. Then, oid711f = "a.b.d" is referenced in the object-ID forwarding table 11 of Node If. Node If finds that Node If itself is a node 1 responsible for name resolution because the nexthop_nid712f is "local".

The name-resolution table search unit 67 of Node If obtains the lid 722f = "d.e.f.a" from oid721f = "a.b.d" in the name-resolution table 12. In addition, the location-ID forwarding table search unit 65 of Node If obtains nexthop_nid732f = "e" from lid 731f = "d.e.f.a".

Then, after the lid forwarding with lid = "d.e.f.a", store_id 742a = 300 is identified from oid741a = "a.b.d" in the stored-data table 14 of Node 1a, and the object 9 is read from the address 300 in the data storage 31 of Node 1a.

The present embodiment described above forwards the object request message up to Node 1f performing name resolution by oid forwarding using the object ID as shown by the solid arrow in FIG. 1, and forwards the object request message beyond Node 1f by lid forwarding using the location ID as shown by the dashed arrows in FIG. 1. That is, this embodiment uses both the lid forwarding and the oid forwarding in the same data-centric communications system.

Furthermore, the present embodiment enables the terminal 2, if sending the object request message only once (refer to the description of S117), can achieve both name resolution and forwarding to the destination of the object request message for which the name resolution is completed. In other words, the terminal 2 can obtain a desired object from an object return message only by specifying a data ID in the object request message for the moving object, without explicitly requesting translation from a host ID to a location ID (name resolution).

It should be appreciated that Node 1 responsible for name resolution (Node If in FIG. 1) may be identified as a node 1 in which the next hop for oid is "local" as described regarding the nexthop_nid712f of the object-ID forwarding table 11 in FIG. 16, instead of node 1 of which oid hits in perfect match as described in S183 or the like.

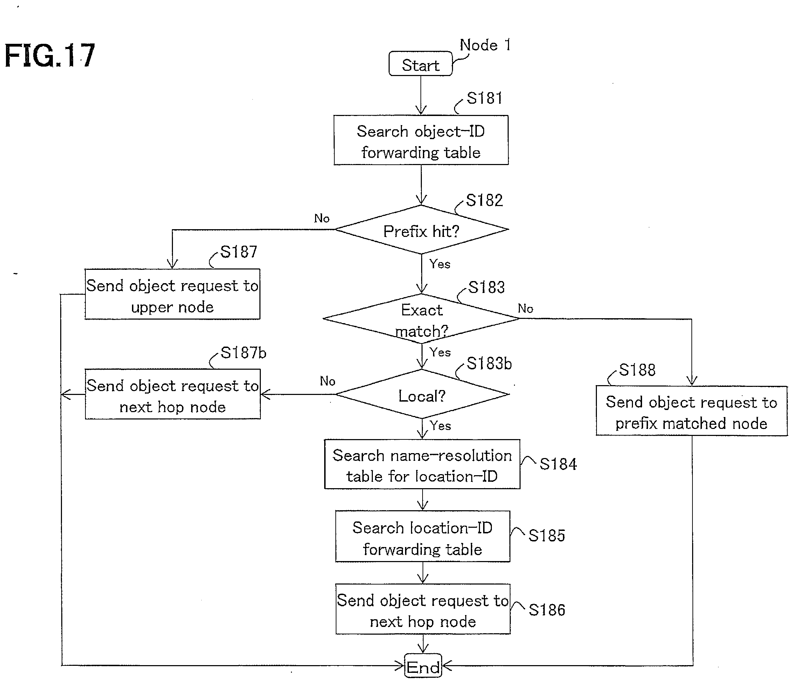

Further, as shown in FIG. 17, the node 1 satisfying the AND condition of a condition in which oid hits in exact match (S183, Yes) and a condition in which the next hop is "local" (S183b, Yes) maybe selected as the node 1 responsible for name resolution (hereinafter referred to as "name resolution node").

FIG. 17 has two processes (S183b, S187b) added to FIG. 6. S187b is a process of sending an object request to the forwarding destination node 1 that is the next hop because the node 1 in process itself is not responsible for name resolution, similarly to S188.

Contrastingly, in the method according to NPL 1 and NPL 2, since it is necessary for a client (terminal) to receive a response of name resolution, the terminal needs to take a burden to implement a function for requesting a name resolution. At the same time, a server (service provider such as DNS) also needs to take a cost for managing and maintaining the service.

In addition, since data communications starts after the name resolution, latency (delay) for data communications occurs during a preparation period of name resolution, and network efficiency also deteriorates due to traffic of control packets for performing name resolution. In particular, in the method of NPL 2, since a request to convert a host ID to a location ID wanders around the DHT every communications, excessive traffics and delay occur.

Furthermore, in the present embodiment, when each node 1 forwards an object return message or an object registration message, in conjunction with the forwarding process, a process for registering the object ID in the forwarding table of each node 1 (refer to, for example, S202 and S305). Thereby, even for an object 9 whose location is frequently changed, the latest location information can be reflected in the forwarding table immediately.

In contrast, in a conventional system caching a translation result of name resolution into nodes on the way to the DNS server in order to reduce the load on the DNS server, since it often occurs that the cache data may not surely reflect the latest location information, it becomes difficult to identify the actual location of the object 9 of which the location is frequently changed.

That is, if the host of the communications partner is physically moved, the translation result of the name resolution is changed since the IP address is changed although the host name is unchanged. Therefore, the old cached translation result becomes different from the new translation result after the movement of the host.

In the present embodiment described above, even if a location of an object 9 is changed, when the node in which the latest location information is registered in the same node 1 as before, the sending address of the object request message is not changed and kept to be the same node 1. Therefore, it is not necessary to change the route for an oid forwarding of the object request message (entries of the object-ID forwarding table 11).

On the other hand, when the location of the object 9 is changed and the latest location information is registered in a node 1 other than the node 1 before the change, the route for the oid forwarding of the object request message needs to be changed to direct toward the latest node 1 registering the latest location information.

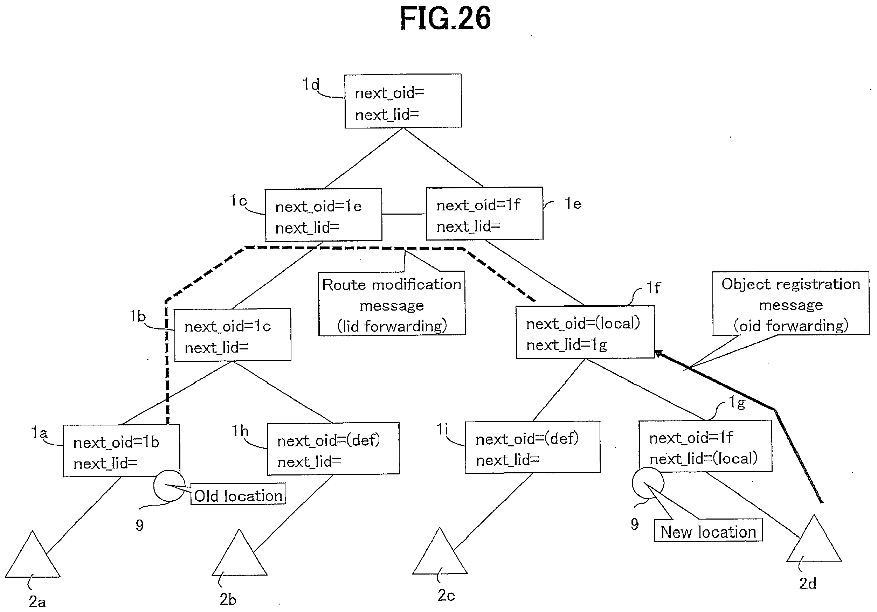

Therefore, the following defines a new message referred to as "route modification message" (details are explained in FIG. 26 described below and the like). The route modification message is a message for modifying an entry in the object-ID forwarding table 11. Hereinafter, detailed description is made of a way to achieve the direction of the object request message toward the node 1 responsible to name resolution in which the latest location of the object 9 is registered using the route modification message.

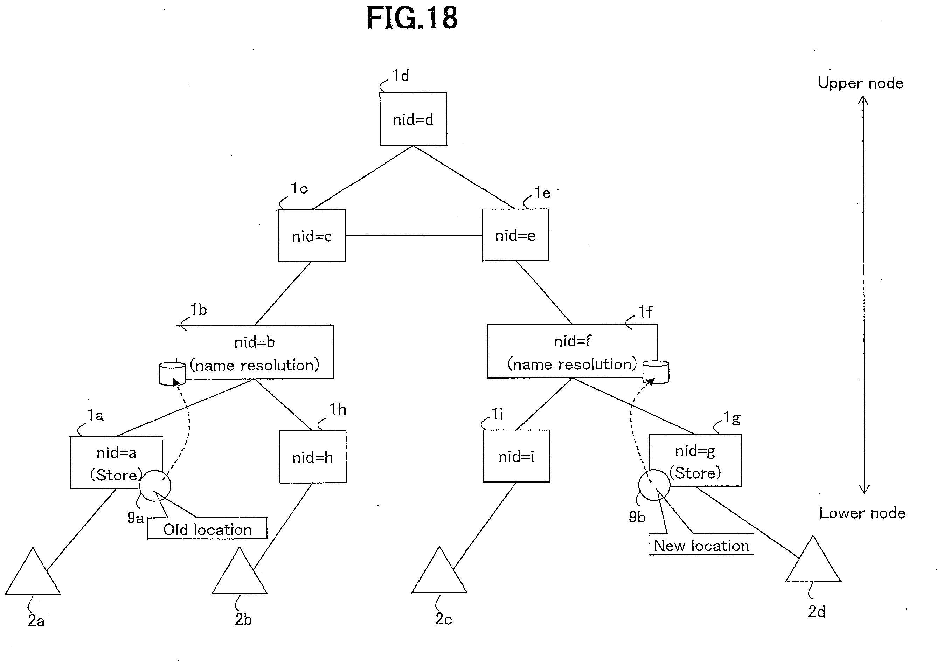

FIG. 18 is a configuration diagram showing a data-centric communications system (for describing two locations of data). Comparing with the data-centric communications system of FIG. 1, two nodes (Node 1h with nid = h, and Node 1i with nid = i) are added, the terminals 2 are increased to 4 units (terminals 2a to 2d).

Further, in FIG. 18, two objects 9 (9a and 9b) are the same object with the same oid (= "a.b.c") that has been stored as the object 9a in Node 1a (old location) and then is stored as the object 9b in Node 1g (new location). Note that the name resolution node for the old location of the object 9 is Node 1b and that the name resolution node for the new location of the object 9 is Node If.
"First node" of claims is Node 1g including Terminal 2d.
"Second node" of claims is a name resolution node (Node 1b or Node 1f).
"Third node" of claims is a data storing node (Node 1a or Node 1g).

In order to implement the moving process from the object 9a to the object 9b, it is essentially necessary to delete the object 9a after storing the object 9b. However, the following description explains a case in which a problem occurs under a situation in which the object 9a exists even after storing the object 9b, and a solution to the case.

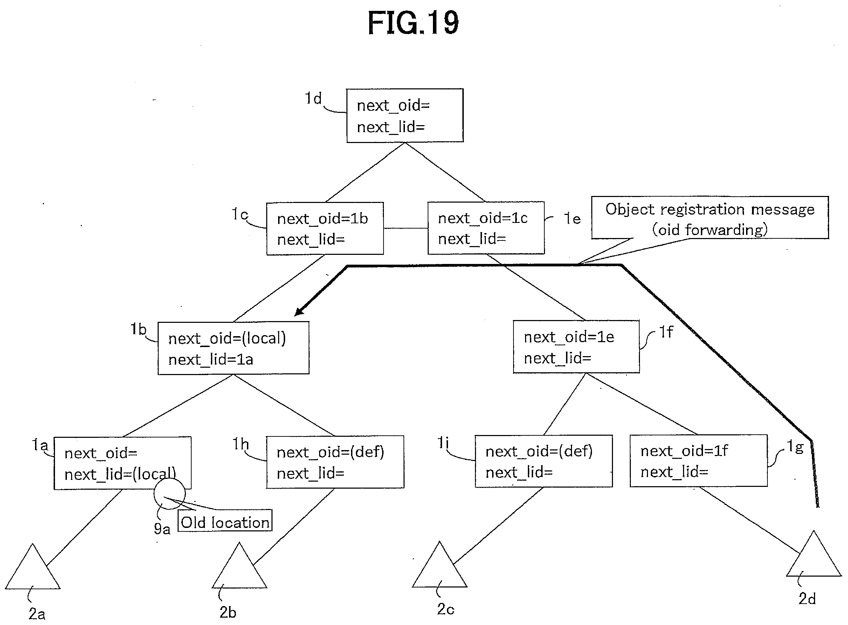

FIG. 19 is a configuration diagram showing a registration of the object in the old location in the system of FIG. 18. The object registration message of the object 9a is sent by Terminal 2d, relayed sequentially through Node 1g → Node 1f → Node 1e → Node 1c, and the old location of the object 9 is registered in Node 1b that is a name resolution node. The object 9 itself is stored in Node 1a that is the old location.

In nodes 1 on the way through which the object registration message is relayed (Node 1g → Node 1f → Node 1e → Node 1c), each of the object-ID forwarding tables 11 of the nodes 1 is updated (for the specific update process, refer to S305 in FIG. 13, or the like). That is, each node 1 on the way writes oid of the object 9a (= "a.b.c") into oid711 of the object-ID forwarding table 11 thereof; and writes an adjacent node directing toward Node 1a, into nexthop_nid712 of the object-ID forwarding table 11 thereof.

In the following description, the content of nexthop_nid712 of the object-ID forwarding table 11 is referred to as "next_oid" in a box of the node; and the content of nexthop_nid731 of the location-ID forwarding table 13, "next_lid".

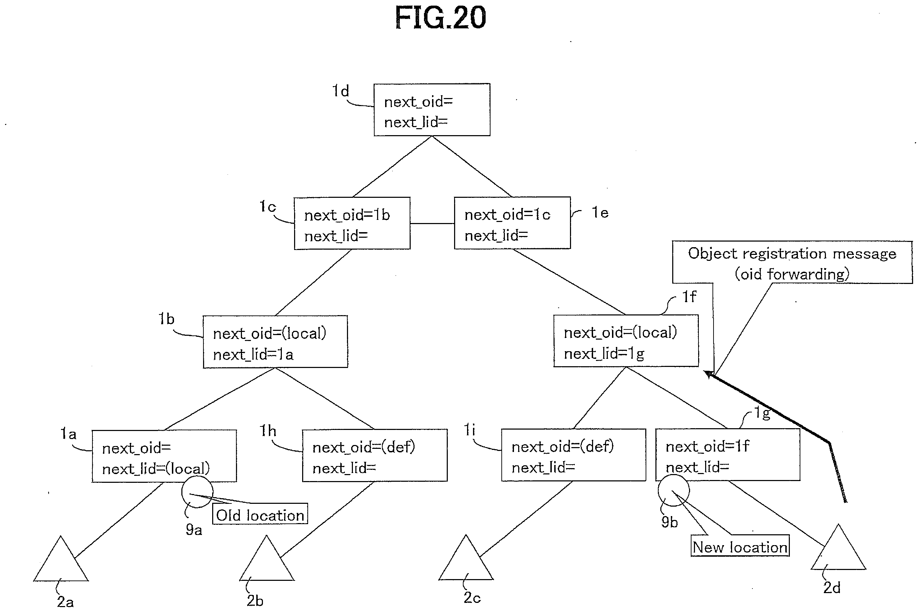

FIG. 20 is a configuration diagram showing a registration of the object in the new location in the system of FIG. 18. The object registration message of the object 9b is sent by Terminal 2d, relayed through Node 1g, and the new location of the object 9 is registered in Node 1f that is a name resolution node. The object 9 itself is stored in Node 1g that is the new location.

In this case, Node 1f and 1g which the object registration messages pass through, can update the contents of the object-ID forwarding table 11 thereof such that the new name resolution node is Node 1f (for the specific update process, refer to S305 in FIG. 13 or the like). On the other hand, in Node 1e, 1c, and 1b in FIG. 20 which the object registration messages do not pass through, the content of each object-ID forwarding table 11 thereof remains Node 1b that is the old name resolution node.

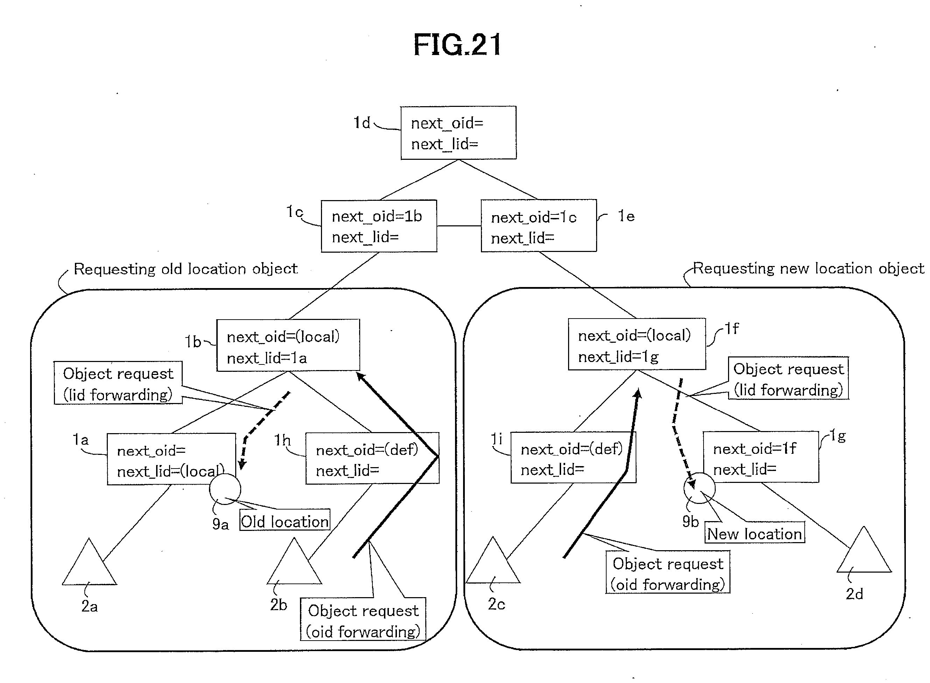

FIG. 21 is a configuration diagram showing requests of the objects at the two locations in the system of FIG. 18. As the result of changing the data content of the object 9b after copying the object 9a to the object 9b, the state occurs in which the data content of the object 9a and the object 9b are inconsistent.

The left side of FIG. 21 shows an example in which Terminal 2b sends an object request message for the object 9a in the old location. The object request message from Terminal 2b passes through in the order of Node 1h →Node 1b (name resolution node) → Node 1a. As the result, Terminal 2b retrieves the object 9a containing the old data content, which is not desirable.

The cause that makes Terminal 2a retrieve the old object 9a is that the influence of the old object registration message shown in FIG. 19 remains in Node 1e, 1c, and 1b which the new object registration message shown in FIG. 20 does not pass through.

The right side of FIG. 21 shows an example in which Terminal 2c can send the object request message for the object 9b in the new location. The object request message from Terminal 2c passes through in the order of Node 1i → Node If (name resolution node) → Node 1g. Thereby, Terminal 2c can retrieve the object 9b containing the new data content.

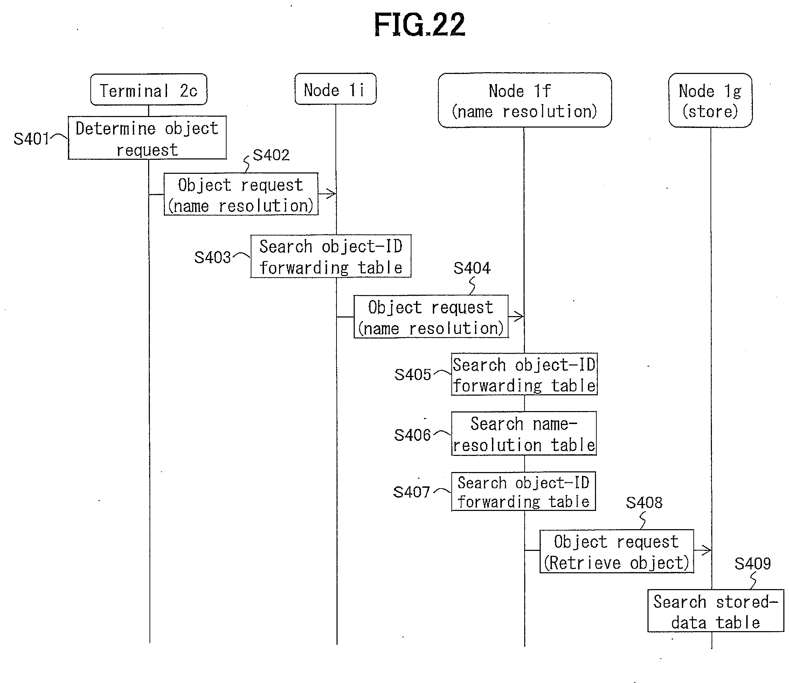

FIG. 22 is a flowchart showing a process of the right side of FIG. 21 (a process of requesting the object in the new location). This flowchart describes the same process as the object request processing shown in FIG. 4 and 5, only except for the change in the location of nodes 1.

In S401, Terminal 2c determines to request the object "oid = a.b.c" in the same manner as S101.

In S402, Terminal 2c sends the object request message (for name resolution) to Node 1i that is the next hop adjacent, in the same manner as S102.

Node 1i located on the route of the object request message (for name resolution) performs the following steps.
Step 1: receiving the object request message (for name resolution) from the preceding device in the same manner as S102 (S402).
Step 2: searching the object-ID forwarding table 11 thereof to determine the forwarding destination of the object request message in the same manner as S103 (S403).
Step 3: sending the object request message to a succeeding device that is determined as a forwarding destination in the same manner as S104 (S404)

Node 1f that is a name resolution node of the object request message (for name resolution) performs the following steps.
Step 1: receiving the object request message (for name resolution) from the preceding device in the same manner as S113 (S404).
Step 2: searching the object-ID forwarding table 11 thereof to determine that the name resolution node of the object request message is Node If itself in the same manner as S114 (S405).
Step 3: searching the name-resolution table 12 to obtain the location ID of the object 9 in the same manner as S115 (S406).
Step 4: searching the location-ID forwarding table 13 to obtain the next hop in the lid forwarding of the object request message in the same manner as S116 (S407).
Step 5: sending the object request message (for object retrieve) generated from the object request message (for name resolution) to the next hop obtained from the location-ID forwarding table 13 (a succeeding device) in the same manner as S117 (S408).

Node 1g storing therein the object 9 that the object request message requests performs the following steps.
Step 1: receiving the object request message (for object retrieve) from the preceding device in the same manner as S117 (S408).
Step 2: searching the stored-data table 14 thereof to obtain the stored data ID, and to read the requested object 9 from the data storage 31 in the same manner as S118 (S409), then generating an object return message based on the object 9 read.

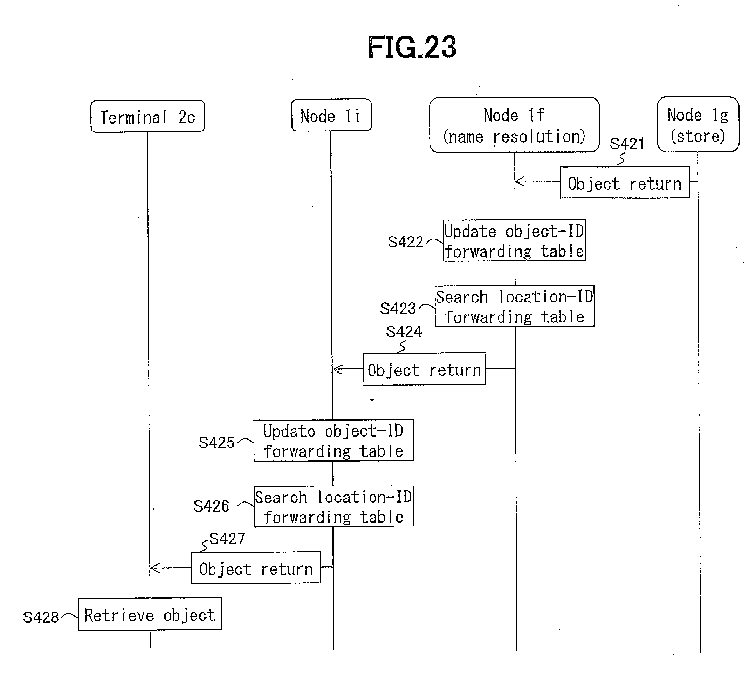

FIG. 23 is a flowchart showing a process at the right side of FIG. 21 (a process of returning the object in the new location). This flowchart describes the same process as the object return process shown in FIG. 8 and 9, only except for the change in the location of nodes 1.

In S421, Node 1g sends the object return message generated in S118 to Node If that is the adjacent next hop in the same manner as S201.

Each of the nodes 1 located on the route of the object return message performs the following steps.
Step 1: receiving the object return message from the preceding device in the same manner as S201, (S421 if Node If, S424 if Node li).
Step 2: updating the object-ID forwarding table 11 thereof, in the same manner as S202 (S422 and S425).
Step 3: searching the location-ID forwarding table 13 thereof to obtain the next hop as the search result in the same manner as S203 (S423, S426).
Step 4: sending the object return message to the next hop obtained in Step 3 (succeeding device) in the same manner as S204 (S424, S427).

The terminal 2c that is the destination of the object return message (the source of the object request message) performs the following steps.
Step 1: receiving the object return message from the preceding device in the same manner as S220 (S427).
Step 2: obtaining the object 9 in the object return message received in the same manner as in S221. This object 9 is the object 9b at the new location (S428).

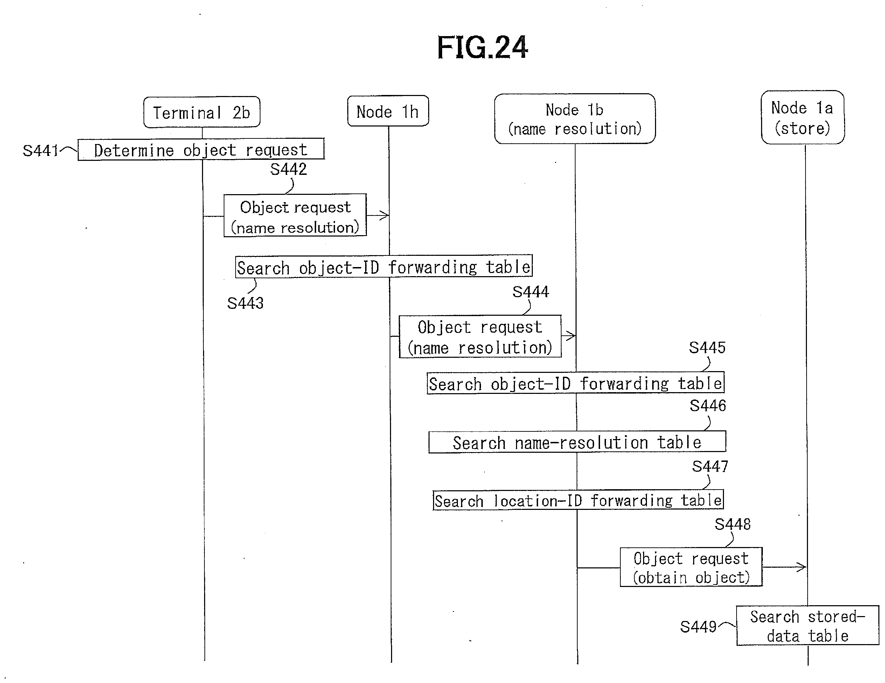

FIG. 24 is a flowchart showing a process of the left side in FIG. 21 (process of requesting the object in the old location). The process in FIG. 24 is the same as the process in FIG. 22, but only the operating subject is changed as below.

Terminal 2c in FIG. 22 → terminal 2b in FIG. 24
Node 1i in FIG. 22 → Node 1h in FIG. 24
Node 1f in FIG. 22 → Node 1b in FIG. 24
Node 1g in FIG. 22 → Node 1a in FIG. 24

In addition, a step code generated by adding 40 to the number of the step code in FIG. 22 (for example, S401) corresponds to the step code in FIG. 24 (for example, S441).

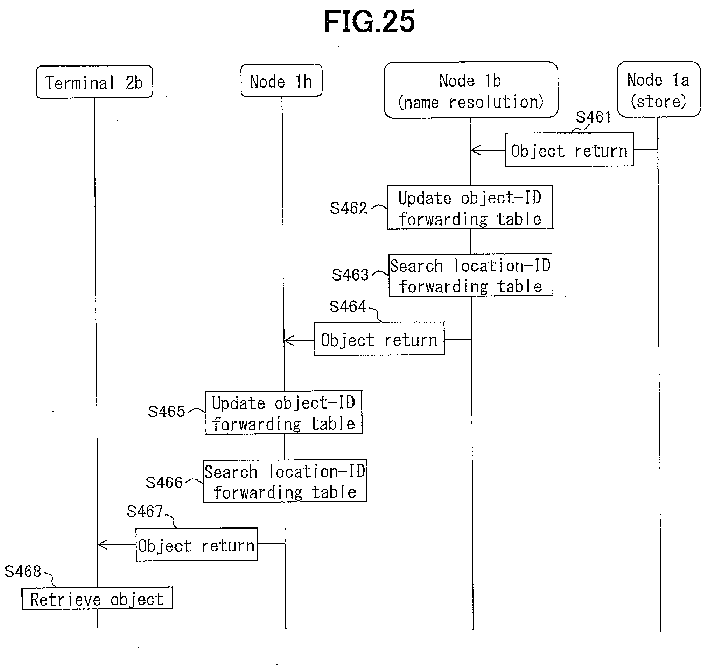

FIG. 25 is a flowchart showing a process of the left side of FIG. 21 (process of returning the object in the old location). The process in FIG. 25 is the same as the process in FIG. 23, except for the change in the operating subject of the process and in the change in the step code (+40 rule) that are the same rules as FIG. 24.

Here, in S468 corresponding to S428, Terminal 2b retrieves the object 9a in the old location (described in FIG. 21).

FIG. 26 is a configuration diagram showing a route modification after registration of the object in FIG. 20.

As described in FIG. 20, Terminal 2d sends the object registration message for registering the object 9b with "oid = a.b.c" via Node 1g to Node 1f that is the name resolution node for the registration destination. In each of nodes 1 through which this object registration message passes, in addition to the sending process to the next hop (a step corresponding to S304), update of the object-ID forwarding table 11 thereof (a step corresponding to S305) is performed. This update process enables the object request to the new location, as shown in the right side in FIG. 21.

Node If that is the name resolution node determines that modification of the old routing information is necessary, if a rewrite to an existing entry occurs in place of a new registration in the update of the name-resolution table 12 thereof that is a process corresponding to S324. The old routing information is the content of the entry in the object-ID forwarding tables 11 of Node 1e, 1c, and 1b that the new object registration message of FIG. 20 does not pass through. In response to the determination of modification, Node If sends a route modification message via the old route.

Here, the destination of the route modification message is set as a lid of Node 1a that stores the objects 9a, and a lid forwarding referring to the location-ID forwarding table 13 is used.

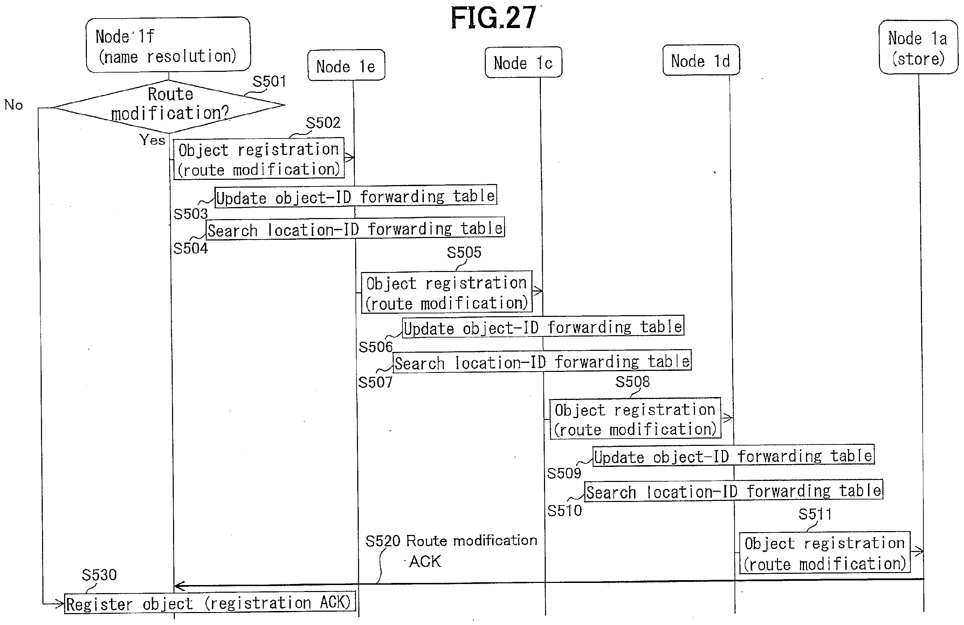

FIG. 27 is a flowchart showing a process of the route modification in FIG. 26 (process for handling the route modification message).

In S501, as shown in the description of FIG. 26, Node 1f determines whether or not it is necessary to modify the old routing information. If no modification is necessary ("No" at S501), Node 1f proceeds to S530. If modification is necessary ("Yes" at S501), Node If generates a message containing "oid = a.b.c" and the storage location "lid = d.c.b.a" (address of Node 1a) of the old object 9a.

Then, Node If searches the location-ID forwarding table 13 and finds Node 1e as the next hop corresponding to lid of the route modification message, and sends the route modification message to Node 1e (S502). Note that the route modification message is represented as "object registration (route modification)" in the flowchart of FIG. 27. This is because the route modification message is a message derived from the object registration message of FIG. 26.

Now, description is made of the procedure of each node 1 (Node 1e → Node 1c → Node 1b) for forwarding the route modification message.
Step 1: the node 1 receives the route modification message from the preceding device (S502 if Node 1e, S505 if Node 1c, and S508 if Node 1b).
Step 2: the object-ID forwarding table generation unit 62 of the node 1 sets oid in the route modification message as a search key to search the object-ID forwarding table 11 thereof and modifies the entry obtained as the search result to update the object-ID forwarding table 11 (S503, S506, and S509).

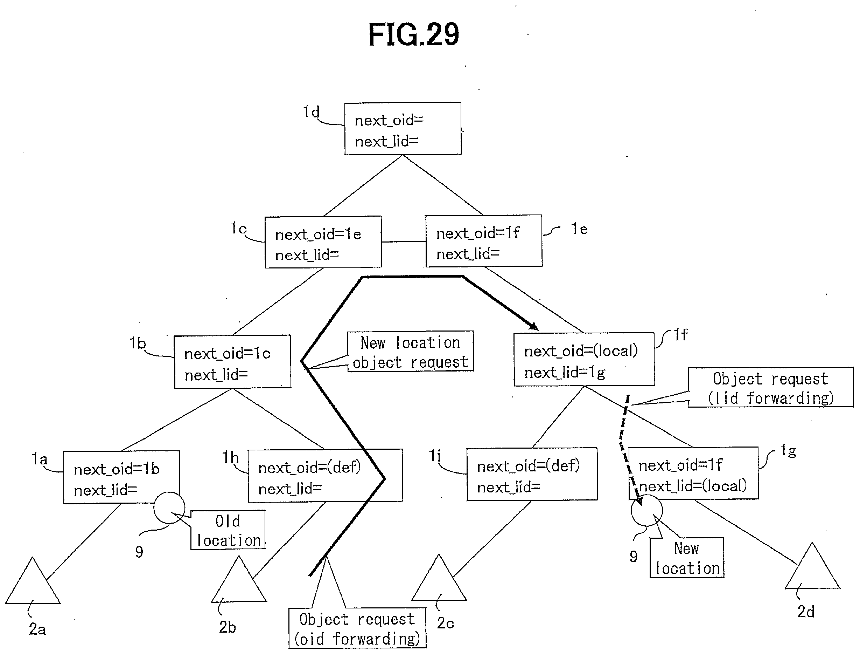

Here, the modification of the entry may be deletion of a record of the entry, or change of the node 1 that is the next hop in the entry from the next hop directing toward the name resolution node for the object 9a (Node 1b) to the next hop directing toward the name resolution node for the object 9b (Node 1f). In the example of FIG. 29 described below, each node 1 implements the change of the next hop as the modification of the entry.
Step 3: the location-ID forwarding table search unit 65 of the node 1 sets lid in the route modification message as a search key to search the location-ID forwarding table 13 and obtains the ID of the node 1 to be the next hop as the search result (S504, S507, and S510).
Step 4: node 1 sends the route modification message to the node 1 of the next hop that is a subsequent device obtained in Step 3 (S505, S508, and S511).

Then the route modification message is sent to Node 1a storing the object 9a, Node 1a sends a reply to the route modification message (ACK) to Node If that is the sender of the route modification message (S520).

When Node 1f determines that the route modification message is not needed to be sent (S501, No), or when Node 1f receives an ACK for the route modification message (S520), Node If returns ACK for the object registration message from which the route modification message derives to the terminal 2 that is the sending source of the object registration message (S530).

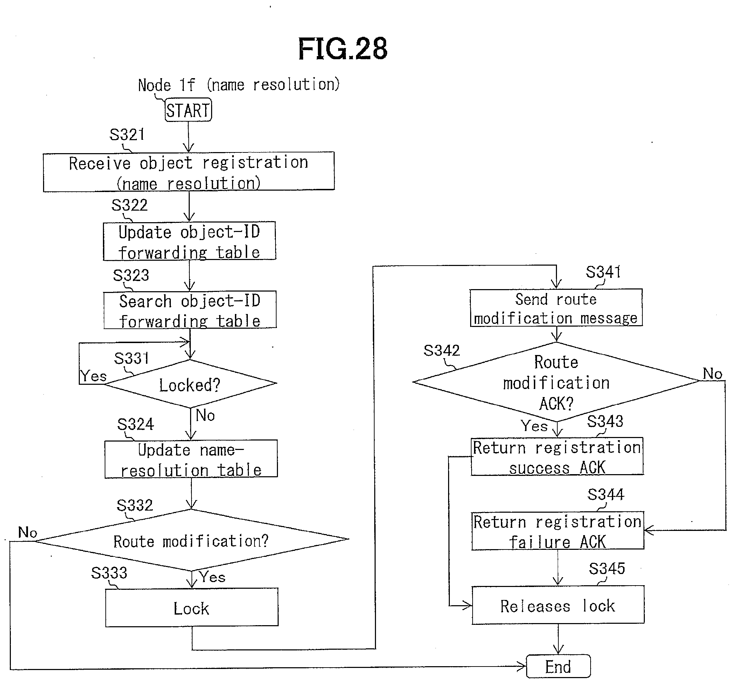

FIG. 28 is a flow chart showing a process of a name resolution node (Node 1f) in the route modification process in FIG. 26. This flowchart is executed by another process newly invoked each time an object registration message arrives.

Note that since this flowchart is an extension of the steps in Node If previously described in FIG. 14 (S321 to S324), the detailed description is omitted of the steps in Node If already described (S321 to S324).

Node If, upon receipt of the object registration (name resolution) (S321), updates the object-ID forwarding table 11 (S322) and search the object-ID forwarding table 11 S323).

Here, Node 1f performs a locking process so that a plurality of route modification messages that Node If itself manages are not concurrently generated. This locking process delays an issue of another route modification message until the ACK for the issued route modification message is received since issuing the route modification message.

Therefore, when it is currently locked (Yes at S331), it is after a previous route modification message is already issued, therefore Node 1f can advance the process to S324 after releasing the lock by the previous route modification message (S345). In S324, Node 1f updates the name-resolution table 12.

It should be understood that since the releasing of the lock by the previous route modification message (S345) and the waiting by the current route modification message for releasing of the lock (Yes at S331) are being executed in parallel by different processes respectively, it is unlikely that the waiting for releasing of the lock continues forever (deadlock).

In S332, Node 1f determines whether or not it is necessary to modify the old routing information (the same as S501). When the modification is unnecessary (No at S332), Node 1f returns an ACK for the object registration message to the terminal 2 (S530 in FIG. 27) and completes the process. When the modification is necessary (Yes at S332), Node If locks the succeeding route modification message (S333), then sends the current route modification message (S341, the same as S502).

Node If waits for a predetermined period of time starting with, for example, the sending time of the message at S341 and determines whether or not Node 1f receives an ACK for the current route modification message.

When receiving the ACK for the current route modification message (Yes at S342), Node 1f returns an ACK notifying the successful registration as a response to the object registration message of S530 (S343).

If Node If cannot receive the ACK for the current route modification message (No at S342), Node If returns an ACK notifying the registration failure as a response to the object registration message of S530 (S344).

Then, Node If releases the lock applied (S333) for the succeeding route modification message (S345).

FIG. 29 is a configuration diagram showing an object request after sending the route modification message of FIG. 26. By the route modification message described in FIGS. 26 to 28, the entries of the object-ID forwarding tables 11 of Node 1e, 1c, and 1b have been modified from the next hop directing toward Node 1b that is the old name resolution node to the next hop directing toward Node If that is the new name resolution node.

For example, next_oid of Node 1b is modified to Node 1c that is the next hop directing toward Node 1f. Therefore, as compared with FIG. 21, the object request message from Terminal 2b is directed to Node 1c, not to Node 1a, at Node 1b that is a relay point.

In other words, even if any terminal 2 (terminal 2a to 2d) issues an object request message, the object-ID forwarding table 11 of each node 1 is modified so that the message reaches Node If.

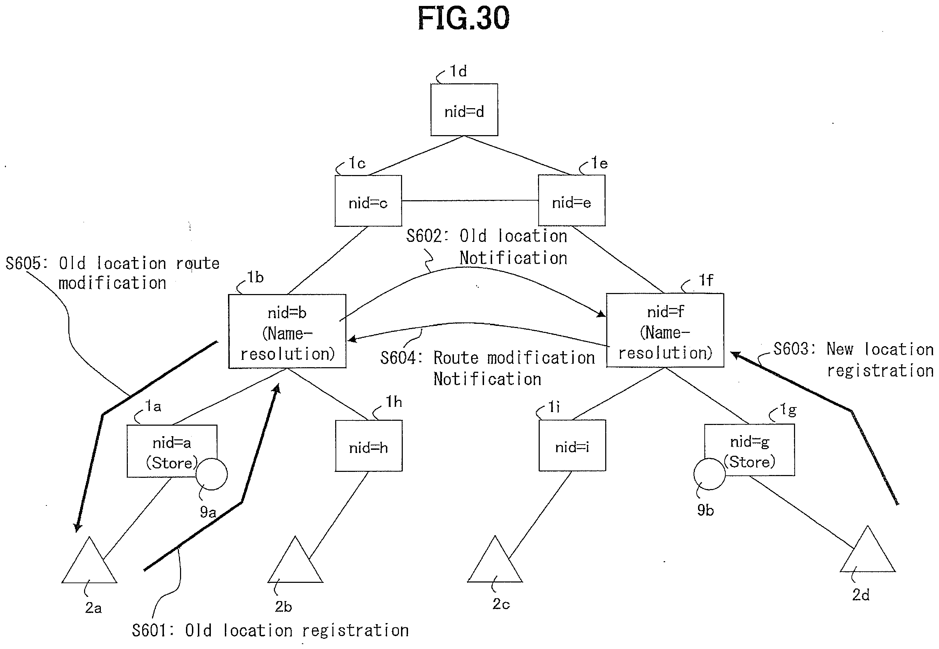

FIG. 30 is a configuration diagram showing a route modification different from that of FIG. 26 in the system of FIG. 18. The process of determining the necessity for modifying the old routing information in FIG. 26 and FIG. 27 (S501) determines whether or not the modification is necessary, as an example, on the basis of the data update of the name-resolution table 12 (the case in which rewriting of an existing entry occurs, not a new registration).

On the other hand, there exists a case in which the same Node If has not both of old and new entries. FIG. 30 shows the case in which an object registration message for the old location passes through in the order of Terminal 2a → Node 1a → Node 1b (S601), and an object registration message for the new location passes through in the order of Terminal 2d → Node 1g → Node If (S603). In this case, since Node 1f does not exist on the route which the object registration message for the old location passes through, Node If does not know the entry of the object 9a at the old location (old entry). Therefore, since Node If cannot detect the necessity of rewriting the existing entry, it is difficult to issue a route modification message.

Accordingly, in order for Node 1b and Node 1f that are the name resolution nodes to exchange the entries thereof with each other, Node 1b notifies to Node If that the object 9a is registered in Node 1b in S601 (notification of the old location) (S602).

Since the notification message issued at S602 enables Node 1f to recognize the registration content in Node 1b and to detect the necessity of rewriting the existing entries. Specifically, the name-resolution table search unit 67 of Node 1f matches the entry in the name-resolution table 12 thereof with the entry of name-resolution table 12 notified by Node 1b, and detect the necessity of rewriting the existing entries when there exist entries having the same oid in the name-resolution tables 12 of both nodes.

Then, in place of the sending process in FIG. 26, in which Node If sends a route modification message originated thereby using lid forwarding, Node 1f notifies to Node 1b having the old entry to request to issue a route modification message (notification of route modification) (S604).

Node 1b receiving the notification sends a route modification message originated thereby using oid forwarding in the direction reverse to that of the object registration message at S601 (S605). Thus, the old entries registered in the nodes 1 on the route of the object registration message at S601 are modified to the new entries based on the route modification message at S605 (overwriting).

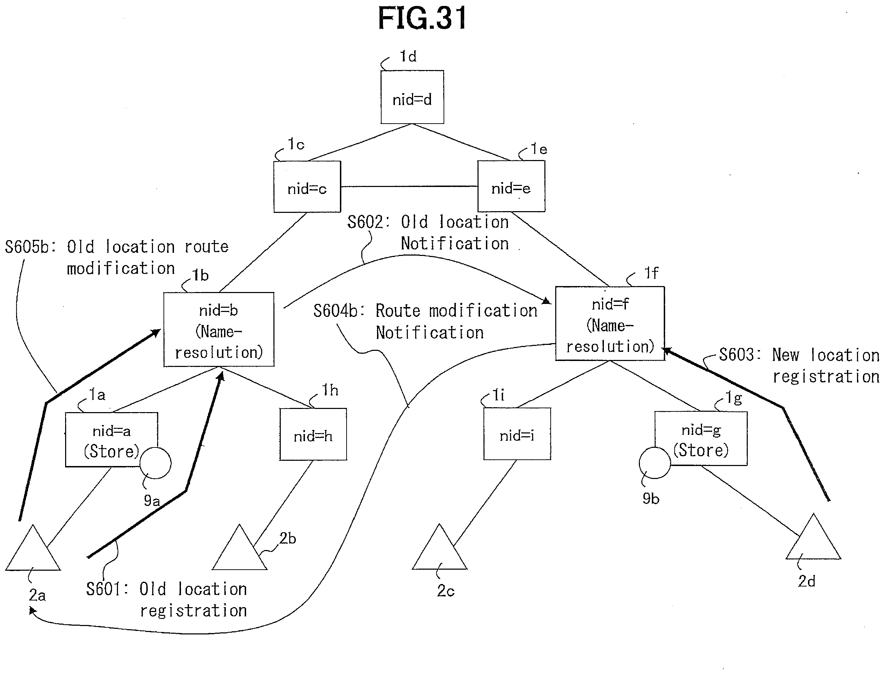

FIG. 31 shows another embodiment of a request of sending the route modification message different from FIG. 30. The notification of route modification in FIG. 30 (S604) is replaced by a notification of route modification (S604b) in FIG. 31. In other words, Node 1f requests the sending of the route modification message to Terminal 2a that is the source of the object registration message.

Thereby, since it is possible for the object registration message at S601 and the route modification message at S605b to pass through the same route from the source to the destination, the old entry is modified to the new entry along the route.

It should be appreciated that the present invention is not limited to the embodiments described above, and that the present invention can include various modifications. For example, the embodiments described above are detailed for easy understanding but the present invention is not necessarily limited to include all the structures described.

Further, some structures of one of the embodiment can be replaced by structures of another embodiment, and a structure of an embodiment can be added to structures of another embodiment.

Furthermore, some of the structures of each embodiment can be deleted, or additions of or substitutions with other structures can be applied thereto. In addition, a part or whole of the above structures, functions, processing units, and processing means may be implemented by hardware, for example, an integrated circuit design.

Further, each of the above structures and functions may be implemented by software by a processor's interpreting and executing of programs performing respective functions.

Information including programs implementing respective functions, tables, and files may be stored in recording devices such as memory, hard disk, or SSD (Solid State Drive), or stored on a recording medium such as IC (Integrated Circuit) card, SD card, or DVD.

Further, for control connection lines or information connection lines, only what is considered necessary for explanation is illustrated, and it should not be understood that all the control connection lines or information connection lines on a product are illustrated. It may be considered all structures are connected to each other in actual practice.

### Reference Sings List

1: node
2: terminal
9: object
10: control data storing unit
11: object-ID forwarding table
12: name-resolution table
13: location-ID forwarding table
14: stored-data table
20: data forwarding unit
21: data sender-receiver
30: data storing unit
31: data storage
40: communication IF
50: network
60: control processing unit
61: node management unit
62: object-ID forwarding table generation unit
63: object-ID forwarding table search unit
64: location-ID forwarding table generation unit
65: location-ID forwarding table search unit
66: name-resolution table generation unit
67: name-resolution table search unit
68: stored-data table search unit

## Claims

1. A data-centric communications system comprising a plurality of nodes (1) and a network (50), wherein
the plurality of nodes (1) are coupled to each other by the network (50) and include a first node (1a to 1e), a second node (1f), and a third node (1g);
the first node (1a to 1e) is adapted to receive a request message from a terminal (2a) to retrieve an object;
the request message is adapted to be forwarded from the first node (1a), through the second node (1f), and to the third node (1g);
the third node (1g) is adapted to retrieve the object stored in the third node (1g) itself;
the third node (1g) itself is adapted to retrieve the object; and
each of the third node (1g), the second node (1f), and the first node (1a to 1e) is adapted to perform routing of a return message including the object retrieved, and thereby the terminal (2a) is adapted to retrieve from the first node (1a) the object that the terminal (2a) requests using the request message,
**characterized in that:**
the request message includes an object identifier, object ID;
the first node (1a to 1e) is adapted to store first predefined routing information searched for retrieving a route to the second node (1f) using the object ID;
the second node (1f) is adapted to store predefined name resolution information (12) for performing name resolution identifying a location identifier, location ID of the third node (1g) from the object ID;
the first node (1a to 1e) and the second node (1f) are further adapted to store second predefined routing information searched for retrieving a route from the second node (1f) to the third node (1g) using the location ID of the third node (1g);
the first node (1a to 1e) is adapted to perform routing of the request message to the second node (1f) using the object ID and the first routing information;
the second node is adapted to convert the object ID included in the request message to the location ID of the third node (1g) by referring to the name resolution information (12), and to add the location ID converted into the request message;
each of the first node (1a to 1e) and the second node (1f) are further adapted to perform routing of the request message from the second node to the third node using the location ID converted, and
each node from the third node (1g) to the first node (1a to 1e) is adapted to perform routing of the return message including the object retrieved, using the second predefined routing information and the location ID of terminal (2a).

2. The data-centric communications system according to claim 1, wherein
each of the plurality of nodes (1) performing the routing of the return message is adapted to add the routing information of the object ID included in the return message into the first predefined routing information stored in the node itself and to perform another routing of the object ID by using the first predefined routing information stored in the node.

3. The data-centric communications system according to claim 1, wherein
the third node is adapted to generate the return message in reference to passed-route information of the request message indicating a route order of the nodes through which the request message passes, and
each of the plurality of nodes performing the routing of the return message is adapted to:
identify nodes through which the request message passes on the basis of the passed-route information included in the request message;
select from passed nodes a node on a shortcut route that can shorten the route; and
store the node on the shortcut route in the first predefined routing information stored in the node itself.

4. The data-centric communications system according to claim 1, wherein
each node from the first node (1a) to the second node (1f) is adapted to perform routing of a registration message for registering an object, and to store in each node itself the routing information of an object ID included in the registration message as the first predefined routing information; and
the second node is adapted to store in the second node itself as the name resolution information (12) the object ID in the registration message and a location ID of a node in which the object is registered.

5. The data-centric communications system according to claim 4, wherein
the second node, in a process of storing therein the name resolution information (12) based on the registration message newly issued, is adapted to issue a modification message for modifying the routing information stored by the registration message issued in the past, including the object ID in the registration message issued in the past, if the object ID of the name resolution information (12) based on the registration message newly issued matches the object ID of the name resolution information (12) based on the registration message issued in the past; and
each of the plurality of nodes on a route of the registration message issued in the past, is adapted to, on receiving the modification message, perform a modification of an entry of the routing information stored therein, if the object ID of the entry in the name resolution information (12) matches the object ID of the modification message.

6. The data-centric communications system according to claim 5, wherein
the second node is adapted to send a first one of the modification message and to send a second one of the modification message other than the first modification message after receiving an acknowledgement, ACK for the first modification message.

7. The data-centric communications system according to claim 5, wherein
the second node is adapted to notify a failure of registering the object as an acknowledgement, ACK for the registration message, if the second node fails to receive an ACK for the modification message after sending the modification message.

8. The data-centric communications system according to any one of claims 5 to 7, wherein
each of the plurality of nodes on the route of the registration message issued in the past is adapted to, on receiving the modification message, perform a modification for deleting the entry of which the object ID in the name resolution information (12) matches the object ID of the modification message.

9. The data-centric communications system according to any one of claims 5 to 7, wherein
each node on the route of the registration message issued in the past is adapted to, on receiving the modification message, perform a modification for updating a next hop of the routing information stored therein with a node directing forward the second node that stores the name solution information based on the registration message newly issued, for the entry in which the object ID of the name resolution information (12) matches the object ID of the modification message.

10. The data-centric communications system according to any one of claims 1 to 9, wherein
the object ID is hierarchically configured and represented.

11. A data forwarding method performed by a data-centric communications system for accessing an object stored in a data-centric network (50) formed by coupling a plurality of nodes (1) to each other, the plurality of nodes (1) including a first node (1a to 1e), a second node (1f), and a third node (1g), the third node storing the object,
**characterized in that:**
the method comprising:
storing in a storing unit of the first node separately:
an object ID forwarding information (11) for associating an object identifier, object ID for identifying the object with a location ID of the node that is a next hop directing toward the second node; and
a location ID forwarding information (13) for associating a location ID indicating the third node storing the object with a location ID of a node that is a next hop directing toward the third node;
storing in a storing unit of the second node separately:
a name resolution information (12) enabling name resolution from the object ID to the location ID indicating the third node; and
the location ID forwarding information (13), wherein
when an object request message specifying the object ID to retrieve the object indicated by the object ID is issued:
the first node receiving the object request message:
sets the object ID in the object request message as a search key to search the object ID forwarding information (11), obtains the location ID of a next hop, and forwards the object request message to the node that is the next hop, when the object request message does not include the location ID of the third node,
sets the location ID of the third node as a search key to search the location ID forwarding information (13), obtains the location ID of a next hop, and forwards the object request message to the node that is the next hop, when the object request message includes the location ID of the third node; and
the second node receiving the object request message:
sets the object ID in the object request message as a search key to search the name resolution information (12), obtains the location ID indicating the third node storing the object; and
sets the obtained location ID of the third node as a search key to search the location ID forwarding information (13), obtains a location ID of a next hop directing to the third node, adds the location ID obtained to the object request message, and forwards the object request message to the node that is the next hop.

## Patentansprüche

1. Datenzentriertes Kommunikationssystem, das mehrere Knoten (1) und ein Netz (50) umfasst, wobei
die mehreren Knoten (1) durch das Netz (50) aneinander gekoppelt sind und einen ersten Knoten (1a bis 1e), einen zweiten Knoten (1f) und einen dritten Knoten (1g) enthalten;
der erste Knoten (1a bis 1e) ausgelegt ist, eine Anforderungsnachricht von einem Endgerät (1a) zu empfangen, um ein Objekt zu erfassen;
die Anforderungsnachricht ausgelegt ist, von dem ersten Knoten (1a) durch den zweiten Knoten (1f) an den dritten Knoten (1g) weitergeleitet zu werden;
der dritte Knoten (1g) ausgelegt ist, das in dem dritten Knoten (1g) selbst gespeicherte Objekt zu erfassen;
der dritte Knoten (1g) selbst ausgelegt ist, das Objekt zu erfassen; und jeder des dritten Knotens (1g), des zweiten Knotens (1f) und des ersten Knotens (1a bis 1e) ausgelegt ist, ein Weiterleiten einer Rücknachricht, die das erfasste Objekt enthält, auszuführen, und dadurch das Endgerät (2a) ausgelegt ist, von dem ersten Knoten (1a) das Objekt zu erfassen, das das Endgerät (2a) unter Verwendung der Anforderungsnachricht anfordert,
**dadurch gekennzeichnet, dass:**
die Anforderungsnachricht eine Objektkennung, Objekt-ID, enthält;
der ersten Knoten (1a bis 1e) ausgelegt ist, erste im Voraus definierte Weiterleitungsinformationen zu speichern, nach denen gesucht wird, um eine Route zu dem zweiten Knoten (1f), unter Verwendung der Objekt-ID zu erfassen;
der zweiten Knoten (1f) ausgelegt ist, im Voraus definierte Namensauflösungsinformationen (12) zum Ausführen einer Namensauflösung, die eine Ortskennung, Orts-ID, des dritten Knotens (1g) identifiziert, von der Objekt-ID zu speichern;
der erste Knoten (1a bis 1e) und der zweite Knoten (1f) ferner ausgelegt sind, zweite im Voraus definierte Weiterleitungsinformationen, nach denen gesucht wird, um eine Route von dem zweiten Knoten (1f) zu dem dritten Knoten (1g) unter Verwendung der Orts-ID des dritten Knotens (1g) zu erfassen, zu speichern;
der erste Knoten (1a bis 1e) ausgelegt ist, ein Weiterleiten der Anforderungsnachricht an den zweiten Knoten (1f) unter Verwendung der Objekt-ID und der ersten Weiterleitungsinformationen auszuführen;
der zweite Knoten ausgelegt ist, die in der Anforderungsnachricht enthaltene Objekt-ID in die Orts-ID des dritten Knotens (1g) durch Bezugnahme auf die Namenauflösungsinformationen (12) umzusetzen und die umgesetzte Orts-ID zu der Anforderungsnachricht hinzuzufügen;
der erste Knoten (1a und 1e) und der zweite Knoten (1f) ferner ausgelegt sind, ein Weiterleiten der Anforderungsnachricht von dem zweiten Knoten zu dem dritten Knoten unter Verwendung der umgesetzten Orts-ID auszuführen, und
jeder Knoten von dem dritten Knoten (1g) zu dem ersten Knoten (1a bis 1e) ausgelegt ist, ein Weiterleiten der Rücknachricht, die das erfasste Objekt enthält, unter Verwendung der zweiten im Voraus definierten Weiterleitungsinformationen und der Orts-ID des Endgeräts (2a) auszuführen.

2. Datenzentriertes Kommunikationssystem nach Anspruch 1, wobei
jeder der mehreren Knoten (1), die das Weiterleiten der Rücknachricht ausführen, ausgelegt ist, die Weiterleitungsinformationen der Objekt-ID, die in der Rücknachricht enthalten sind, zu den ersten im Voraus definierten Weiterleitungsinformationen hinzuzufügen, die in dem Knoten selbst gespeichert sind, und ein anderes Weiterleiten der Objekt-ID durch Verwenden der ersten im Voraus definierten Weiterleitungsinformationen, die in dem Knoten gespeichert sind, auszuführen.

3. Datenzentriertes Kommunikationssystem nach Anspruch 1, wobei
der dritte Knoten ausgelegt ist, die Rücknachricht in Bezug auf Informationen über die durchlaufene Route der Anforderungsnachricht, die eine Routenreihenfolge der Knoten, durch die die Anforderungsnachricht gelaufen ist, angeben, zu erzeugen, und
jeder der mehreren Knoten, die das Weiterleiten der Rücknachricht ausführen, ausgelegt ist zum:
Identifizieren von Knoten, durch die die Anforderungsnachricht durchläuft, aufgrund der Informationen über die durchlaufene Route, die in der Anforderungsnachricht enthalten sind;
Auswählen aus durchlaufenen Knoten einen Knoten auf einer Abkürzungsroute, der die Route kürzen kann; und
Speichern des Knotens auf der Abkürzungsroute in den ersten im Voraus definierten Weiterleitungsinformationen, die in dem Knoten selbst gespeichert sind.

4. Datenzentriertes Kommunikationssystem nach Anspruch 1, wobei
jeder Knoten von dem ersten Knoten (1a) zu dem zweiten Knoten (1f) ausgelegt ist, ein Weiterleiten einer Registrierungsnachricht zum Registrieren eines Objekts auszuführen und in jedem Knoten selbst die Weiterleitungsinformationen eines Objekt-ID, die in der Registrierungsnachricht enthalten sind, als die ersten im Voraus definierten Weiterleitungsinformationen zu speichern; und
der zweite Knoten ausgelegt ist, in dem zweiten Knoten selbst als die Namensauflösungsinformationen (12) die Objekt-ID in der Registrierungsnachricht und eine Orts-ID eines Knotens, in dem das Objekt registriert ist, zu speichern.

5. Datenzentriertes Kommunikationssystem nach Anspruch 4, wobei
der zweite Knoten in einem Vorgang des Speicherns in ihm der Namensauflösungsinformationen (12) anhand der neu ausgegebenen Registrierungsnachricht ausgelegt ist, eine Änderungsnachricht zum Ändern der Weiterleitungsinformationen, die durch die in der Vergangenheit ausgegebene Registrierungsnachricht gespeichert sind, auszugeben, die die Objekt-ID in der in der Vergangenheit ausgegeben Registrierungsnachricht enthält, wenn die Objekt-ID der Namensauflösungsinformationen (12) anhand der neu ausgegebenen Registrierungsnachricht mit der Objekt-ID der Namensauflösungsinformationen (12) anhand der in der Vergangenheit ausgegebenen Registrierungsnachricht übereinstimmt; und
jeder der mehreren Knoten auf einer Route der in der Vergangenheit ausgegebenen Registrierungsnachricht ausgelegt ist, beim Empfangen der Änderungsnachricht eine Änderung eines Eintrags der in ihm gespeicherten Weiterleitungsinformationen auszuführen, wenn die Objekt-ID des Eintrags in den Namensauflösungsinformationen (12) mit der Objekt-ID der Änderungsnachricht übereinstimmt.

6. Datenzentriertes Kommunikationssystem nach Anspruch 5, wobei
der zweite Knoten ausgelegt ist, eine erste der Änderungsnachricht zu senden und eine zweite der Änderungsnachricht, die von der ersten Änderungsnachricht verschieden ist, nach dem Empfangen einer Bestätigung, ACK, für die erste Änderungsnachricht zu senden.

7. Datenzentriertes Kommunikationssystem nach Anspruch 5, wobei
der zweite Knoten ausgelegt ist, einen Fehler des Registrierens des Objekts als eine Bestätigung, ACK, für die Registrierungsnachricht zu melden, wenn der zweite Knoten scheitert, eine ACK für die Änderungsnachricht, nach dem Senden der Änderungsnachricht zu empfangen.

8. Datenzentriertes Kommunikationssystem nach einem der Ansprüche 5 bis 7, wobei
jeder der mehreren Knoten auf der Route der in der Vergangenheit ausgegebenen Registrierungsnachricht ausgelegt ist, beim Empfangen der Änderungsnachricht eine Änderung zum Löschen des Eintrags, dessen Objekt-ID in den Namensauflösungsinformationen (12) mit der Objekt-ID der Änderungsnachricht übereinstimmt, auszuführen.

9. Datenzentriertes Kommunikationssystem nach einem der Ansprüche 5 bis 7, wobei
jeder Knoten auf der Route der in der Vergangenheit ausgegebenen Registrierungsnachricht ausgelegt ist, beim Empfangen der Änderungsnachricht eine Änderung zum Aktualisieren eines nächsten Sprungs der in ihm gespeicherten Weiterleitungsinformationen mit einem Knoten, der den zweiten Knoten vorwärts lenkt, der die Namensauflösungsinformationen speichert, anhand der neu ausgegebenen Registrierungsnachricht für den Eintrag, in dem die Objekt-ID der Namensauflösungsinformationen (12) mit der Objekt-ID der Änderungsnachricht übereinstimmt, auszuführen.

10. Datenzentriertes Kommunikationssystem nach einem der Ansprüche 1 bis 9, wobei
die Objekt-ID hierarchisch konfiguriert und repräsentiert ist.

11. Datenweiterleitungsverfahren, das durch ein datenzentriertes Kommunikationssystem ausgeführt wird, zum Zugreifen auf ein Objekt, das in einem datenzentrierten Netz (50) gespeichert ist, das durch Koppeln mehreren Knoten (1) miteinander gebildet wird, wobei die mehreren Knoten (1) einen ersten Knoten (1a bis 1e), einen zweiten Knoten (1f) und einen dritten Knoten (1g) enthalten, wobei der dritte Knoten das Objekt speichert,
**dadurch gekennzeichnet, dass:**
das Verfahren Folgendes umfasst:
Speichern in einer Speichereinheit des ersten Knotens getrennt:
Objekt-ID-Weiterleitungsinformationen (11) zum Zuordnen einer Objektkennung, Objekt-ID, zum Identifizieren des Objekts mit einer Orts-ID des Knotens, der ein nächster Sprung in Richtung des zweiten Knotens ist; und
Orts-ID-Weiterleitungsinformationen (13) zum Zuordnen einer Orts-ID, die den dritten Knoten angibt, der das Objekt speichert, zu einer Orts-ID eines Knotens, der ein nächster Sprung in Richtung des dritten Knotens ist;
Speichern in einer Speichereinheit des zweiten Knotens getrennt:
Namensauflösungsinformationen (12), die eine Namensauflösung von der Objekt-ID zu der Orts-ID, die den dritten Knoten angibt, ermöglichen; und
der Orts-ID-Weiterleitungsinformationen (13), wobei dann, wenn eine Objektanforderungsnachricht, die die Objekt-ID spezifiziert, um das durch die Objekt-ID angegebene Objekt zu erfassen, ausgegeben wird:
der erste Knoten, der die Objektanforderungsnachricht empfängt:
die Objekt-ID in der Objektanforderungsnachricht als einen Suchschlüssel einstellt, um die Objekt-ID-Weiterleitungsinformationen (11) zu suchen, die Orts-ID eines nächsten Sprungs erhält und die Objektanforderungsnachricht an den Knoten weiterleitet, der der nächste Sprung ist, wenn die Objektanforderungsnachricht die Orts-ID des dritten Knotens nicht enthält,
die Orts-ID des dritten Knotens als einen Suchschlüssel einstellt, um die Orts-ID-Weiterleitungsinformationen (13) zu suchen, die Orts-ID eines nächsten Sprungs erhält und die Objektanforderungsnachricht an den Knoten weiterleitet, der der nächste Sprung ist, wenn die Objektanforderungsnachricht die Orts-ID des dritten Knotens enthält; und
der zweite Knoten, der die Objektanforderungsnachricht empfängt:
die Objekt-ID in der Objektanforderungsnachricht als einen Suchschlüssel einstellt, um die Namensauflösungsinformationen (12) zu suchen, die Orts-ID, die den dritten Knoten angibt, der das Objekt speichert, erhält; und
die erhaltene Orts-ID des dritten Knotens als einen Suchschlüssel einstellt, um die Orts-ID-Weiterleitungsinformationen zu suchen, die Orts-ID eines nächsten Sprungs, der zu dem dritten Knoten lenkt, erhält, die erhaltene Orts-ID zu der Objektanforderungsnachricht hinzufügt und die Objektanforderungsnachricht an den Knoten weiterleitet, der der nächste Sprung ist.

## Revendications

1. Système de communication centré sur les données comprenant une pluralité de noeuds (1) et un réseau (50), dans lequel
la pluralité de noeuds (1) sont couplés les uns aux autres par le réseau (50) et incluent un premier noeud (1a à 1e), un deuxième noeud (1f) et un troisième noeud (1g);
le premier noeud (1a à 1e) est adapté à recevoir un message de demande d'un terminal (2a) pour récupérer un objet ;
le message de demande est adapté à être transféré du premier noeud (1a), à travers le deuxième noeud (1f), au troisième noeud (1g) ;
le troisième noeud (1g) est adapté à récupérer l'objet stocké dans le troisième noeud (1g) lui-même ;
le troisième noeud (1g) lui-même est adapté à récupérer l'objet ; et
chacun du troisième noeud (1g), du deuxième noeud (1f) et du premier noeud (1a à 1e) est adapté à effectuer un routage d'un message de retour incluant l'objet récupéré, et ainsi le terminal (2a) est adapté à récupérer du premier noeud (1a) l'objet que demande le terminal (2a) en utilisant le message de demande,
**caractérisé en ce que** :
le message de demande comprend un identificateur d'objet, ID d'objet ;
le premier noeud (1a à 1e) est adapté à stocker des premières informations de routage prédéfinies recherchées pour récupérer une route vers le deuxième noeud (1f) en utilisant l'ID d'objet ;
le deuxième noeud (1f) est adapté à stocker des informations de résolution de nom prédéfinies (12) pour effectuer une résolution de nom identifiant un identificateur de localisation, ID de localisation, du troisième noeud (1g) à partir de l'ID d'objet ;
le premier noeud (1a à 1e) et le deuxième noeud (1f) sont en outre adaptés à stocker de secondes informations de routage prédéfinies recherchées pour récupérer une route du deuxième noeud au troisième noeud (1g) en utilisant l'ID de localisation du troisième noeud (1g) ;
le premier noeud (1a à 1e) est adapté à effectuer le routage du message de demande vers le deuxième noeud (1f) en utilisant l'ID d'objet et les premières informations de routage ;
le deuxième noeud est adapté à convertir l'ID d'objet inclus dans le message de demande en ID de localisation du troisième noeud (1g) en se référant aux informations de résolution de nom (12) et à ajouter l'ID de localisation converti dans le message de demande ;
chacun du premier noeud (1a à 1e) et du deuxième noeud (1f) est en outre adapté à effectuer le routage du message de demande du deuxième noeud au troisième noeud en utilisant l'ID de localisation converti et
chaque noeud du troisième noeud (1g) au premier noeud (1a à 1e) est adapté à effectuer le routage du message de retour incluant l'objet récupéré en utilisant les secondes informations de routage prédéfinies et l'ID de localisation du terminal (2a).

2. Système de communication centré sur les données selon la revendication 1, dans lequel
chacun de la pluralité de noeuds (1) effectuant le routage du message de retour est adapté à ajouter les informations de routage de l'ID d'objet incluses dans le message de retour dans les premières informations de routage prédéfinies stockées dans le noeud lui-même et à effectuer un autre routage de l'ID d'objet en utilisant les premières informations de routage prédéfinies stockées dans le noeud.

3. Système de communication centré sur les données selon la revendication 1, dans lequel
le troisième noeud est adapté à générer le message de retour en référence à des informations de route passée du message de demande indiquant un ordre de route des noeuds par lesquels le message de demande passe, et
chacun de la pluralité de noeuds effectuant le routage du message de retour est adapté à :
identifier les noeuds par lesquels le message de demande passe sur la base des informations de route passée incluses dans le message de demande ;
sélectionner parmi les noeuds passés un noeud sur une route raccourcie qui peut raccourcir la route ; et
stocker le noeud sur la route raccourcie dans les premières informations de routage prédéfinies stockées dans le noeud lui-même.

4. Système de communication centré sur les données selon la revendication 1, dans lequel
chaque noeud du premier noeud (1a) au deuxième noeud (1f) est adapté à effectuer le routage d'un message d'enregistrement pour enregistrer un objet et à stocker dans chaque noeud lui-même les informations de routage d'un ID d'objet incluses dans le message d'enregistrement en tant que premières informations de routage prédéfinies ; et
le deuxième noeud est adapté à stocker dans le deuxième noeud lui-même en tant qu'informations de résolution de nom (12) l'ID d'objet dans le message d'enregistrement et un ID de localisation d'un noeud dans lequel l'objet est enregistré.

5. Système de communication centré sur les données selon la revendication 4, dans lequel
le deuxième noeud, dans un processus consistant à y stocker les informations de résolution de nom (12) sur la base du message d'enregistrement nouvellement émis, est adapté à émettre un message de modification pour modifier les informations de routage stockées par le message d'enregistrement émis dans le passé, incluant l'ID d'objet dans le message d'enregistrement émis dans le passé, si l'ID d'objet des informations de résolution de nom (12) sur la base du message d'enregistrement nouvellement émis correspond à l'ID d'objet des informations de résolution de nom (12) sur la base du message d'enregistrement émis dans le passé ; et
chacun de la pluralité de noeuds sur une route du message d'enregistrement émis dans le passé est adapté à, lors de la réception du message de modification, effectuer une modification d'une entrée des informations de routage qui y sont stockées si l'ID d'objet de l'entrée dans les informations de résolution de nom (12) correspond à l'ID d'objet du message de modification.

6. Système de communication centré sur les données selon la revendication 5, dans lequel
le deuxième noeud est adapté à envoyer un premier message de modification et à envoyer un deuxième message de modification autre que le premier message de modification après avoir reçu un accusé de réception, ACK, pour le premier message de modification.

7. Système de communication centré sur les données selon la revendication 5, dans lequel
le deuxième noeud est adapté à notifier un échec d'enregistrement de l'objet sous la forme d'un accusé de réception, ACK, pour le message d'enregistrement, si le deuxième noeud ne reçoit pas un ACK pour le message de modification après avoir envoyé le message de modification.

8. Système de communication centré sur les données selon l'une quelconque des revendications 5 à 7, dans lequel
chacun de la pluralité de noeuds sur la route du message d'enregistrement émis dans le passé est adapté à, lors de la réception du message de modification, effectuer une modification pour supprimer l'entrée dont l'ID d'objet dans les informations de résolution de nom (12) correspond à l'ID d'objet du message de modification.

9. Système de communication centré sur les données selon l'une quelconque des revendications 5 à 7, dans lequel
chaque noeud sur la route du message d'enregistrement émis dans le passé est adapté à, lors de la réception du message de modification, effectuer une modification pour mettre à jour un saut suivant des informations de routage qui y sont stockées avec un noeud dirigeant vers le deuxième noeud qui stocke les informations de résolution de nom sur la base du message d'enregistrement nouvellement émis, pour l'entrée dans laquelle l'ID d'objet des informations de résolution de nom (12) correspond à l'ID d'objet du message de modification.

10. Système de communication centré sur les données selon l'une quelconque des revendications 1 à 9,
dans lequel l'ID d'objet est configuré et représenté de manière hiérarchique.

11. Procédé de transmission de données exécuté par un système de communication centré sur les données pour accéder à un objet stocké dans un réseau centré sur les données (50) formé en couplant une pluralité de noeuds (1) les uns aux autres, la pluralité de noeuds (1) incluant un premier noeud (1a à 1e), un deuxième noeud (1f) et un troisième noeud (1g), le troisième noeud stockant l'objet, **caractérisé en ce que** :
le procédé consiste à :
stocker dans une unité de stockage du premier noeud séparément :
des information de transmission d'ID d'objet (11) pour associer un identificateur d'objet, ID d'objet, pour identifier l'objet avec un ID de localisation du noeud qui est un saut suivant dirigeant vers le deuxième noeud ; et
des information de transmission d'ID de localisation (13) pour associer un ID de localisation indiquant le troisième noeud stockant l'objet avec un ID de localisation d'un noeud qui est un saut suivant dirigeant vers le troisième noeud ;
stocker dans une unité de stockage du deuxième noeud séparément :
des informations de résolution de nom (12) permettant la résolution de nom de l'ID d'objet à l'ID de localisation indiquant le troisième noeud ; et
les informations de transmission d'ID de localisation (13), dans lequel lorsqu'un message de demande d'objet spécifiant l'ID d'objet pour récupérer l'objet indiqué par l'ID d'objet est émis :
le premier noeud recevant le message de demande d'objet :
définit l'ID d'objet dans le message de demande d'objet comme clé de recherche pour rechercher les informations de transmission d'ID d'objet (11), obtient l'ID de localisation d'un saut suivant et transmet le message de demande d'objet au noeud qui est le saut suivant lorsque le message de demande d'objet n'inclut pas l'ID de localisation du troisième noeud,
définit l'ID de localisation du troisième noeud comme clé de recherche pour rechercher les informations de transmission d'ID de localisation (13), obtient l'ID de localisation d'un saut suivant et transmet le message de demande d'objet au noeud qui est le saut suivant lorsque le message de demande d'objet inclut l'ID de localisation du troisième noeud ; et
le deuxième noeud recevant le message de demande d'objet :
définit l'ID d'objet dans le message de demande d'objet comme clé de recherche pour rechercher les informations de résolution de nom (12), obtient l'ID de localisation indiquant le troisième noeud stockant l'objet ; et
définit l'ID de localisation obtenu du troisième noeud comme clé de recherche pour rechercher les informations de transmission d'ID de localisation (13), obtient un ID de localisation d'un saut suivant dirigeant vers le troisième noeud, ajoute l'ID de localisation obtenu au message de demande d'objet et transmet le message de demande d'objet au noeud qui est le saut suivant.
